# EUROPEAN PATENT SPECIFICATION

(11) **EP 3 364 665 B1**
(45) Date of publication and mention of the grant of the patent: **17.02.2021**
(21) Application number: 16855218.0
(22) Date of filing: 12.09.2016
(51) Int. Cl.: H04R 1/06, H04R 3/00, H04S 7/00

(54) **WIRELESS SPEAKER, CONTROLLER, WIRELESS AUDIO SYSTEM, AND COMPUTER-READABLE PROGRAM**
DRAHTLOSER LAUTSPRECHER, STEUERGERÄT, DRAHTLOSES AUDIOSYSTEM UND COMPUTERLESBARES PROGRAMM
HAUT-PARLEUR SANS FIL, DISPOSITIF DE COMMANDE, SYSTÈME AUDIO SANS FIL ET PROGRAMME LISIBLE PAR ORDINATEUR

(30) Priority: 15.10.2015 JP 2015204130
(43) Date of publication of application: 22.08.2018
(73) Proprietor: D&M Holdings Inc., Kawasaki-shi Kanagawa 210-8569 (JP)
(72) Inventor: TAKASU Yasuo, Kawasaki-shi Kanagawa 210-8569 (JP); KATO Tsuyoshi, Kawasaki-shi Kanagawa 210-8569 (JP); FUJII Masato, Kawasaki-shi Kanagawa 210-8569 (JP)
(74) Representative: Mewburn Ellis LLP
(86) International application number: PCT/JP2016/076849
(87) International publication number: WO 2017/064964

(56) References cited:
- JP-A- 2001 177 890
- JP-A- 2007 074 710
- JP-A- 2009 060 232
- JP-A- 2011 211 334
- US-A1- 2014 274 147

## Description

### Technical Field

The present invention relates to a technology of controlling a wireless speaker.

### Background Art

In Patent Literature 1, there is disclosed a wireless audio system, which includes a plurality of wireless speakers grouped into a plurality of groups, and is capable of reproducing music data that is different for each group. In the wireless audio system, for each group, the plurality of wireless speakers belonging to the group perform arbitration to select one wireless speaker from among those wireless speakers. Then, the selected wireless speaker serves as a group leader to receive from a user an operation for the plurality of wireless speakers belonging to the same group and transmit a control signal to those wireless speakers. With this wireless audio system, for example, when a plurality of wireless speakers are installed in each of a plurality of rooms, and the wireless speakers installed in the same room are set as belonging to the same group, music data that is different for each room can be reproduced.

In Patent Literature 2, there is disclosed a technology of reducing the standby power of a wireless speaker. In this technology, a wireless speaker includes a reception circuit for wirelessly receiving command data from an audio player and, when the reception circuit wirelessly receives power-off command data from the audio player, turns off a main power while using a sub-power to put the reception circuit into operation intermittently.

### Citation List

### Patent Literature

[PTL 1] US 7987294 B2
[PTL 2] JP 2006-67336 A
[PTL 3] JP 2011-211334 A discloses a sound-processing apparatus.

### Summary of Invention

### Technical Problem

The wireless audio system described in Patent Literature 1 has a problem in that, when a listener leaves a room in which a wireless speaker currently outputting music data is installed without stopping the output of the music data and does not return to the room, an audio signal is kept output despite the absence of a listener, which is a waste of power. The technology described in Patent Literature 2 is a technology of reducing the standby power of a wireless speaker, and pays no consideration on the reduction of power consumed by a useless output of an audio signal.

The present invention has been made in view of the circumstances described above, and an object of the present invention is to provide a technology with which power consumption can be reduced by preventing a useless output of an audio signal.

### Solution to Problem

In order to attain the object described above, one embodiment of the present invention involves comparing an audio signal that is output from a wireless speaker and an audio signal that is input to a microphone of a controller carried by a user, and determining from the result of the comparison whether the listener is away from the vicinity of the wireless speaker. When it is determined that the listener is away from the vicinity of the wireless speaker, the output of an audio signal from the wireless speaker is stopped.

For example, according to one aspect of the present invention, there is provided a wireless speaker as set out in claim 1.

According to another aspect of the invention, there is provided a wireless speaker as set out in claim 2.

According to another aspect of the present invention, there is provided a controller as set out in claim 4.

According to another aspect of the present invention, there is provided a controller as set out in claim 5.

According to another aspect of the invention, there is provided a program readable by a computer as set out in claim 9.

According to another aspect of the invention, there is provided a program readable by a computer as set out in claim 10.

### Advantageous Effects of Invention

In the present invention, the audio signal that is output from the wireless speaker and the audio signal that is input to the microphone of the controller are compared, and it is determined from the result of the comparison whether the listener carrying the controller is away from the vicinity of the wireless speaker. When it is determined that the listener is away from the vicinity of the wireless speaker, the output of an audio signal from the wireless speaker is stopped. This enables a wireless speaker currently outputting an audio signal to automatically stop the output of an audio signal when a listener leaves a room in which the wireless speaker is installed without stopping the output of an audio signal. Power consumption can thus be reduced by preventing a useless output of an audio signal.

### Brief Description of Drawings

FIG. 1 is a schematic configuration diagram of a wireless audio system according to a first embodiment of the present invention .
FIG. 2 is a sequence diagram for illustrating the operation of the wireless audio system according to the first embodiment of the present invention.
FIG. 3 is a schematic functional block diagram of a wireless speaker 1.
FIG. 4 is a flow chart for illustrating the operation of the wireless speaker 1.
FIG. 5 is a schematic functional block diagram of an audio controller 2.
FIG. 6 is a flow chart for illustrating the operation of the audio controller 2.
FIG. 7 is a sequence diagram for illustrating the operation of a wireless audio system according to a second embodiment of the present invention.
FIG. 8 is a schematic functional block diagram of a wireless speaker 1a.
FIG. 9 is a flow chart for illustrating the operation of the wireless speaker 1a.
FIG. 10 is a schematic functional block diagram of an audio controller 2a.
FIG. 11 is a flow chart for illustrating the operation of the audio controller 2a.

### Description of Embodiments

Now, embodiments of the present invention are described referring to the drawings.

### [First Embodiment]

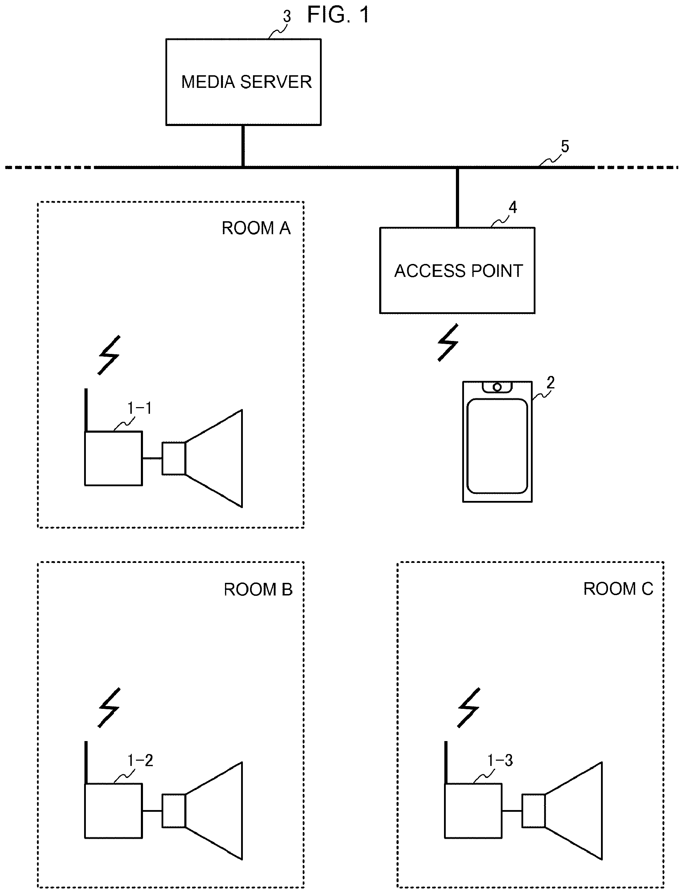

FIG. 1 is a schematic configuration diagram of a wireless audio system according to a first embodiment of the present invention.

As illustrated in FIG. 1, the wireless audio system according to the first embodiment includes a plurality of wireless speakers 1-1 to 1-3 (hereinafter may also simply be referred to as "wireless speaker(s) 1") each having an ID attached thereto, an audio controller 2, which is a portable terminal including a microphone, and a media server 3 and an access point 4, which are connected to a network 5. It is assumed that the wireless speakers 1-1 to 1-3 are installed in individual Rooms A to C, respectively.

Each of the wireless speakers 1 is connected to the audio controller 2 and the media server 3 via the access point 4, and acquires music data from the media server 3 and reproduces the music data for output in accordance with a reproduction instruction received from the audio controller 2. The wireless speaker 1 sequentially measures the output volume levels of audio signals output from the wireless speaker 1 within a predetermined period, and sequentially receives the input volume levels of audio signals from the audio controller 2. The wireless speaker 1 compares the latest input volume level received and the latest output volume level measured to determine whether a listener carrying the audio controller 2 has left the room in which this wireless speaker 1 is installed. When it is determined that the listener has left the room, the output of an audio signal is stopped.

The audio controller 2 is also connected to the wireless speakers 1 and the media server 3 via the access point 4, and transmits the reproduction instruction, which includes the specification of music data selected by a listener from among pieces of music data stored in the media server 3, to one of the wireless speakers 1 that is the output destination of the music data. The audio controller 2 sequentially measures the input volume levels of audio signals input to the microphone within a predetermined period, and transmits the measured input volume levels to the wireless speaker 1 that is the output destination of the music data.

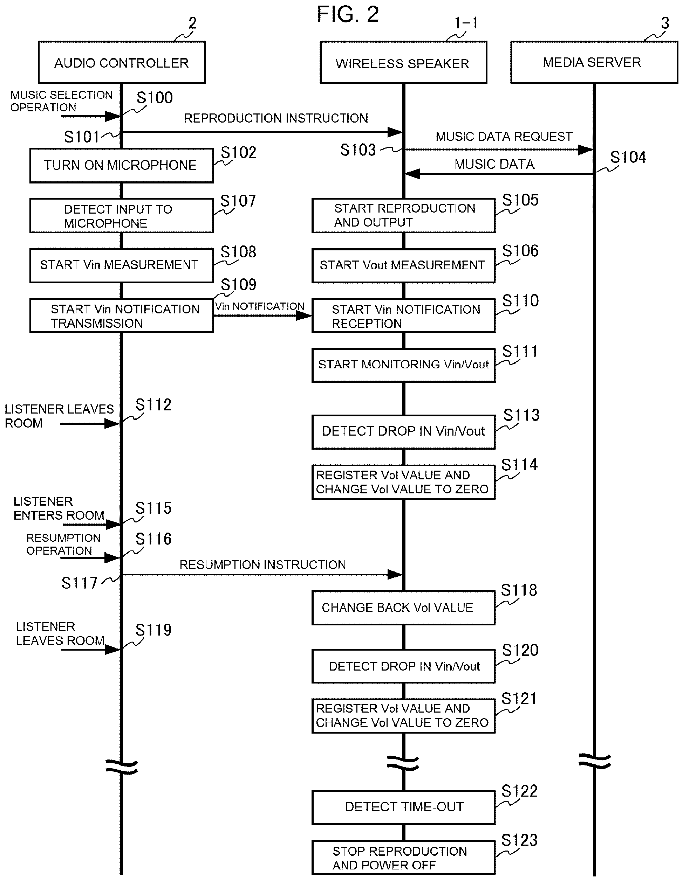

FIG. 2 is a flow chart for illustrating the operation of the wireless audio system according to the first embodiment. The description given here takes as an example a case in which a listener carrying the audio controller 2 enjoys music with the use of the wireless speaker 1-1 installed in Room A.

First, the audio controller 2 receives from the listener carrying the audio controller 2 and staying in Room A music selection operation, which involves the specification of music data to be reproduced and the specification of the ID of the wireless speaker 1-1 as the output destination of the music data (Step S100), and multicasts a reproduction instruction in which the music data to be reproduced and the ID of the wireless speaker 1-1 are specified over the network 5 (Step S101) . The audio controller 2 also turns on the microphone included in the audio controller 2 (Step S102) .

Next, the wireless speaker 1-1 receives the reproduction instruction in which the ID of the wireless speaker 1-1 is specified over the network 5, and transmits to the media server 3 a music data request in which the music data specified by the reproduction instruction is specified (Step S103) . The media server 3 receives the request, identifies the music data that is specified in the music data request received from the wireless speaker 1-1 from among pieces of music data stored in the media server 3, and transmits the identified music data to the wireless speaker 1-1 (Step S104) . The wireless speaker 1-1 receives the music data from the media server 3, and starts reproducing the music data as audio signals and outputting the reproduced audio signals (Step S105). The wireless speaker 1-1 also starts measuring an output volume level Vout of audio signals that are output within a predetermined period T2 (for example, 1 second) at a predetermined interval T1 (for example, a 1-second interval) (Step S106).

Meanwhile, the audio controller 2 detects that the audio signals output from the wireless speaker 1-1 are input to the microphone included in the audio controller 2 (Step S107), and starts measuring an input volume level Vin of audio signals that are input to the microphone within the predetermined period T2 at the predetermined interval T1 (Step S108). Each time the input volume level Vin is newly measured, the audio controller 2 multicasts an input volume level notification (Vin notification) in which the newly measured input volume level Vin and the ID of the wireless speaker 1-1 are specified over the network 5 (Step S109).

The wireless speaker 1-1 receives the notification and starts receiving an input volume level notification in which the ID of the wireless speaker 1-1 is specified over the network 5 (Step S110) . Each time an input volume level notification is newly received, the wireless speaker 1-1 obtains a volume level ratio Vin/Vout, which indicates the proportion of the input volume level Vin that is included in the newly received input volume level notification to the output volume level Vout that is newly measured by the wireless speaker 1-1, and monitors a change in the volume level ratio Vin/Vout (Step S111).

At this point, the listener carrying the audio controller 2 leaves Room A (Step S112), thereby causing the input volume level Vin of an audio signal that is input to the microphone of the audio controller 2 to decrease. The volume level ratio Vin/Vout calculated by the wireless speaker 1-1 rapidly drops as a result. The wireless speaker 1-1 detects that the volume level ratio Vin/Vout has dropped by a predetermined value P (for example, 5 dB) or more within a predetermined period T3 (for example, 4 seconds to 6 seconds) (Step S113), and determines that the listener has left Room A. The wireless speaker 1-1 then registers the value of a sound volume Vol of the wireless speaker 1-1 as resumption information, changes the value of the sound volume Vol to a zero value, and stops outputting an audio signal (Step S114). The wireless speaker 1-1 subsequently waits for a predetermined time-out time T4 (for example, 3 minutes) to elapse.

In a subsequent period before the time-out time T4 elapses, the listener carrying the audio controller 2 reenters Room A (Step S115) . The audio controller 2 receives, from the listener, resumption operation, which involves the specification of the ID of the wireless speaker 1-1 (Step S116), and multicasts a resumption instruction in which the ID of the wireless speaker 1-1 is specified over the network 5 (Step S117).

After the output of an audio signal is stopped and before the time-out time T4 elapses, the wireless speaker 1-1 receives the resumption instruction in which the ID of the wireless speaker 1-1 is specified over the network 5, changes the value of the sound volume Vol from the zero value to the value registered as the resumption information, and resumes the output of an audio signal (Step S118) .

After that, the listener carrying the audio controller 2 leaves Room A again (Step S119), thereby causing the input volume level Vin of an audio signal that is input to the microphone of the audio controller 2 to decrease. The volume level ratio Vin/Vout calculated by the wireless speaker 1-1 rapidly drops as a result. The wireless speaker 1-1 detects that the volume level ratio Vin/Vout has dropped by the predetermined value P or more within the predetermined period T3 (Step S120), and determines that the listener has left Room A. The wireless speaker 1-1 then registers the value of a sound volume Vol of the wireless speaker 1-1 as resumption information, changes the value of the sound volume Vol to a zero value, and stops outputting an audio signal (Step S121) . The wireless speaker 1-1 subsequently waits for the predetermined time-out time T4 to elapse.

When the time-out time T4 elapses without the reentrance of the listener carrying the audio controller 2 to Room A, the wireless speaker 1-1 detects time-out (Step S122), stops the reproduction of music data as audio signals, and powers off (Step S123).

The description given next is about details of the wireless speaker 1 and the audio controller 2 of the wireless audio system according to the first embodiment are described. An existing media server and access point can be used as the media server 3 and the access point 4, and hence detailed descriptions thereof are omitted.

The wireless speaker 1 is described first.

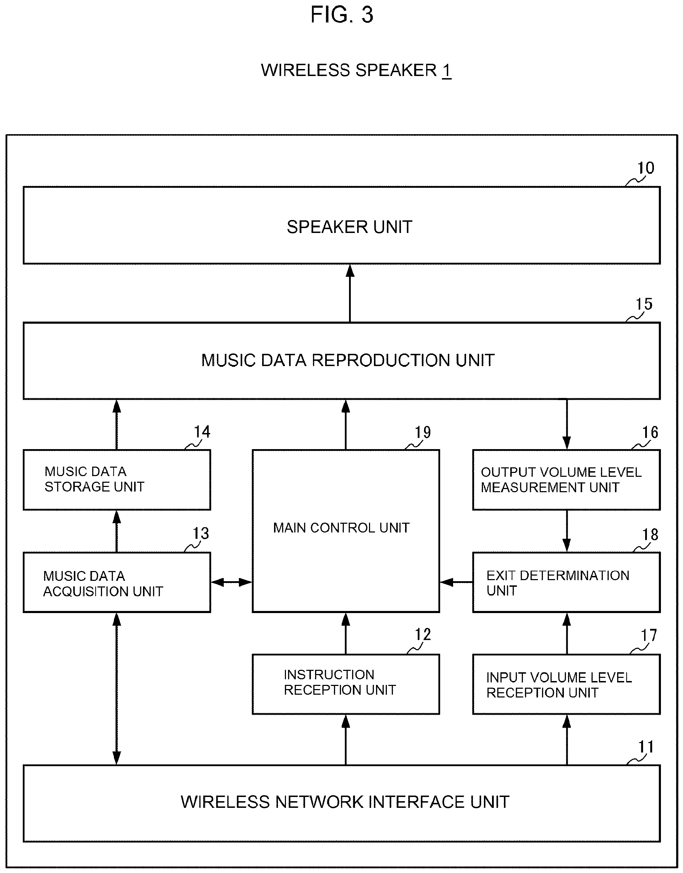

FIG. 3 is a schematic functional block diagram of the wireless speaker 1. The functional configuration of the wireless speaker 1 illustrated in FIG. 3 is implemented by, for example, a CPU included in a computer along with a memory, an auxiliary storage device, which is a flash memory or the like, a wireless communication device, which is a wireless LAN adapter or the like, and a speaker by loading a predetermined program onto the memory from the auxiliary storage device and executing the program.

As illustrated in FIG. 3, the wireless speaker 1 includes speaker unit 10, a wireless network interface unit 11, an instruction reception unit 12, a music data acquisition unit 13, a music data storage unit 14, a music data reproduction unit 15, an output volume level measurement unit 16, an input volume level reception unit 17, an exit determination unit 18, and a main control unit 19.

The wireless network interface unit 11 is an interface for, for example, communicating to/from the audio controller 2 and communicating to/from the media server 3 connected to the network 5 via the access point 4.

The instruction reception unit 12 receives various instructions to each of which the ID of its own wireless speaker 1 is attached from the audio controller 2 via the wireless network interface unit 11.

The music data acquisition unit 13 transmits a music data request including the specification of music data to be reproduced to the media server 3 via the wireless network interface unit 11, and acquires the music data to be reproduced from the media server 3.

The music data storage unit 14 stores the music data acquired by the music data acquisition unit 13 from the media server 3.

The music data reproduction unit 15 reproduces music data stored in the music data storage unit 14 as audio signals, and outputs the audio signals from the speaker unit 10.

The output volume level measurement unit 16 measures, at the predetermined interval T1 (for example, a 1-second interval), the output volume level Vout, which is an average of output volumes of audio signals that are output from the speaker unit 10 by the music data reproduction unit 15 within the predetermined period T2 (for example, 1 second).

The input volume level reception unit 17 receives via the wireless network interface unit 11 an input volume level notification, which is transmitted regularly from the audio controller 2 and which includes the ID of its own wireless speaker 1.

The exit determination unit 18 obtains, each time the input volume level reception unit 17 newly receives an input volume level notification that includes the ID of its own wireless speaker, the volume level ratio Vin/Vout, which indicates the proportion of the input volume level Vin included in the input volume level notification to the latest output volume level Vout measured by the output volume level measurement unit 16. Based on a change in the volume level ratio Vin/Vout, the exit determination unit 18 determines whether the listener carrying the audio controller 2 has left the room in which its own wireless speaker 1 is installed.

The main control unit 19 controls the units 10 to 18 of the wireless speaker 1 in an integrated manner. The main control unit 19 also controls the reproduction/output of music data by the music data reproduction unit 15 and the powering on/off based on the determination made in the exit determination unit 18.

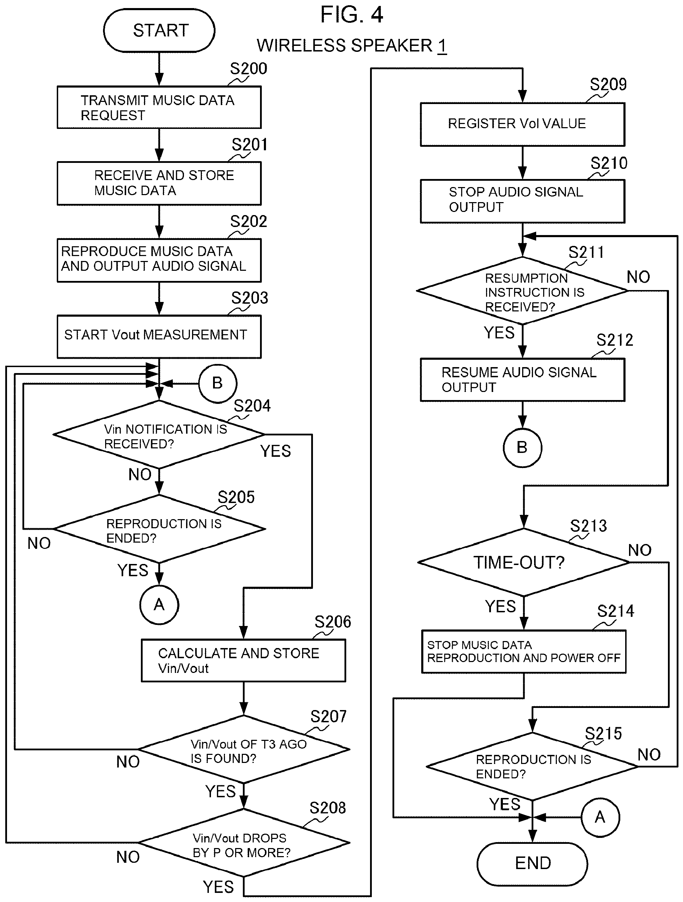

FIG. 4 is a flow chart for illustrating the operation of the wireless speaker 1. This flow is started when the instruction reception unit 12 receives a reproduction instruction to which the ID of its own wireless speaker 1 is attached from the audio controller 2 via the wireless network interface unit 11.

First, the instruction reception unit 12 hands over the received reproduction instruction to the main control unit 19. The main control unit 19 receives the reproduction instruction, and notifies music data specified by the received reproduction instruction as data to be reproduced to the music data acquisition unit 13. The music data acquisition unit 13 transmits a music data request in which the specification of the music data notified by the main control unit 19 is included to the media server 3 via the wireless network interface unit 11 (Step S200).

Next, the music data acquisition unit 13 receives the music data from the media server 3, and stores the received music data in the music data storage unit 14 (Step S201) . The music data acquisition unit 13 also notifies the main control unit 19 of the completion of the acquisition of the music data. The main control unit 19 receives the notification, and notifies the music data to be reproduced to the music data reproduction unit 15. The music data reproduction unit 15 reads the music data to be reproduced out of the music data storage unit 14, reproduces the read data as audio signals, and outputs the reproduced audio signals from the speaker unit 10 (Step S202).

When the music data reproduction unit 15 starts reproducing audio signals, the output volume level measurement unit 16 measures at the predetermined interval T1 the output volume level Vout, which is an average of output volumes of audio signals that are output from the speaker unit 10 by the music data reproduction unit 15 within the predetermined period T2 (Step S203).

When the reproduction of audio signals by the music data reproduction unit 15 ends ("YES" in Step S205), the main control unit 19 ends this flow. When the input volume level reception unit 17 receives via the wireless network interface unit 11 an input volume level notification (Vin notification), which is transmitted regularly from the audio controller 2 and which includes the ID of its own wireless speaker 1 ("YES" in Step S204), at a point preceding the end of the audio signal reproduction by the music data reproduction unit 15 ("NO" in Step S205), the input volume level reception unit 17 hands over the input volume level Vin that is included in the input volume level notification to the exit determination unit 18. The exit determination unit 18 receives the input volume level Vin, and calculates and stores the volume level ratio Vin/Vout, which indicates the proportion of the input volume level Vin received from the input volume level reception unit 17 to the latest output volume level Vout measured by the output volume level measurement unit 16 (Step S206).

The exit determination unit 18 then determines whether a volume level ratio Vin/Vout calculated at a point that goes back by the predetermined period T3 (for example, 4 seconds to 6 seconds) is stored (Step S207). When it is determined that a volume level ratio Vin/Vout calculated at a point that goes back by the predetermined period T3 is not stored ("NO" in Step S207), the flow returns to Step S204.

When it is determined that a volume level ratio Vin/Vout calculated at a point that goes back by the predetermined period T3 is stored ("YES" in Step S207), on the other hand, the exit determination unit 18 compares the volume level ratio Vin/Vout calculated at a point that goes back by the predetermined period T3 and the newly calculated volume level ratio Vin/Vout to determine whether the newly calculated volume level ratio Vin/Vout is lower than the volume level ratio Vin/Vout calculated at a point that goes back by the predetermined period T3 by the predetermined value P (for example, 5 dB) or more (Step S208) . When the newly calculated volume level ratio Vin/Vout is not lower than the volume level ratio Vin/Vout calculated at a point that goes back by the predetermined period T3 by the predetermined value P or more ("NO" in Step S208), the flow returns to Step S204.

When the newly calculated volume level ratio Vin/Vout is lower than the volume level ratio Vin/Vout calculated at a point that goes back by the predetermined period T3 by the predetermined value P or more ("YES" in Step S208), on the other hand, the exit determination unit 18 notifies the main control unit 19 of that fact. In response to the notification, the main control unit 19 registers the value of the sound volume Vol of the music data reproduction unit 15 as resumption information (Step S209), changes the sound volume Vol of the music data reproduction unit 15 to a zero value, and stops the output of an audio signal from the speaker unit 10 (Step S210). The output volume level measurement unit 16 may stop the measurement of the output volume level Vout at this point.

In a subsequent period before the audio signal reproduction by the music data reproduction unit 15 ends ("NO" in Step S215) and before the time runs out with the elapse of the predetermined time-out time T4 (for example, 3 minutes) ("NO" in Step S213), the main control unit 19 waits for the reception of a resumption instruction from the audio controller 2 via the wireless network interface unit 11 and the instruction reception unit 12 (Step S211) . The instruction reception unit 12 receives a resumption instruction in which the ID of its own wireless speaker 1 is specified from the audio controller 2 via the wireless network interface unit 11 ("YES" in Step S211), and notifies the resumption instruction to the main control unit 19. The main control unit 19 receives the resumption instruction, changes the sound volume Vol of the music data reproduction unit 15 from the zero value to the value registered as the resumption information, and resumes the output of an audio signal from the speaker unit 10 (Step S212) . In the case where the measurement of the volume level Vout has been stopped during the period in which the output of an audio signal from the speaker unit 10 is stopped, the output volume level measurement unit 16 resumes the measurement of the output volume level Vout. The flow then returns to Step S204.

When the time runs out with the elapse of the predetermined time-out time T4 (for example, 3 minutes) ("YES" in Step S213) in a period preceding the end of the audio signal reproduction by the music data reproduction unit 15 ("NO" in Step S215) without receiving a resumption instruction from the audio controller 2 via the wireless network interface unit 11 and the instruction reception unit 12 ("NO" in Step S211), on the other hand, the main control unit 19 causes the music data reproduction unit 15 to stop the reproduction of audio signals from music data, and then turns off the main power (Step S214) to end this flow.

The main control unit 19 ends this flow also when the audio signal reproduction by the music data reproduction unit 15 is finished ("YES" in Step S215) before the predetermined time-out time T4 elapses ("NO" in Step S213) without receiving a resumption instruction from the audio controller 2 via the wireless network interface unit 11 and the instruction reception unit 12 ("NO" in Step S211).

The audio controller 2 is described next.

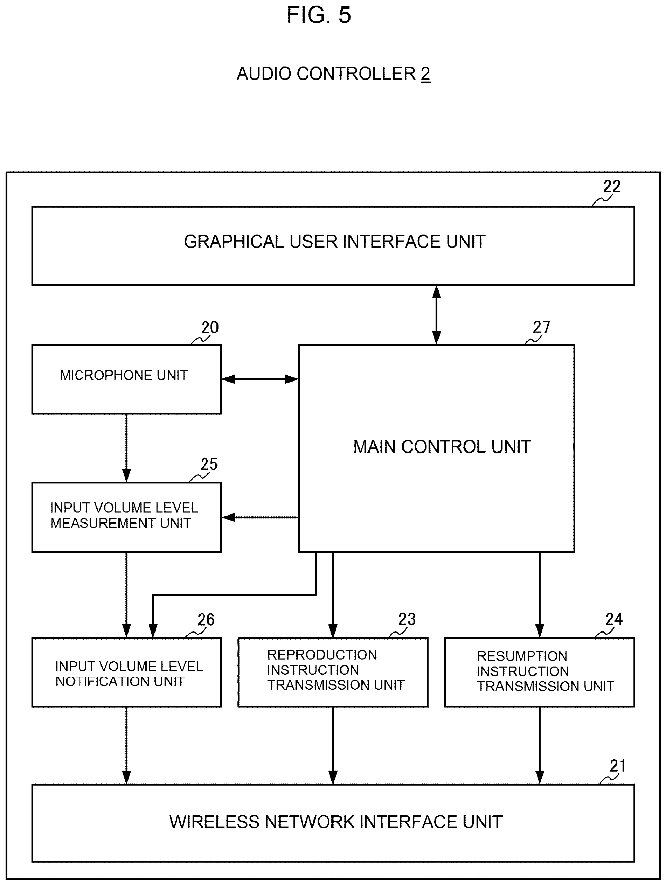

FIG. 5 is a schematic functional block diagram of the audio controller 2. The functional configuration of the audio controller 2 illustrated in FIG. 5 is implemented by, for example, a CPU included in a portable computer, which is a smartphone, a tablet PC, or the like, along with a memory, an auxiliary storage device, which is a flash memory or the like, a touch panel, a display, an input/output device, which is a pointing device or the like, a wireless communication device, which is a wireless LAN adapter or the like, and a microphone by loading a predetermined program onto the memory from the auxiliary storage device and executing the program.

As illustrated in FIG. 5, the audio controller 2 includes a microphone unit 20, a wireless network interface unit 21, a graphical user interface unit 22, a reproduction instruction transmission unit 23, a resumption instruction transmission unit 24, an input volume level measurement unit 25, an input volume level notification unit 26, and a main control unit 27.

The wireless network interface unit 21 is an interface for communicating to/from the wireless speaker 1 via the access point 4.

The graphical user interface unit 22 is an interface for, for example, displaying information and receiving various operations from the user.

The reproduction instruction transmission unit 23 multicasts, from the wireless network interface unit 21, a reproduction instruction in which music data to be reproduced and the ID of one of the wireless speakers 1 that is the output destination of the music data are specified.

The resumption instruction transmission unit 24 multicasts a resumption instruction in which the ID of one of the wireless speakers 1 that is the output destination of the music data is specified from the wireless network interface unit 21.

The input volume level measurement unit 25 measures, at the predetermined interval T1 (for example, a 1-second interval), the input volume level Vin, which is an average of input volumes of audio signals that are input to the microphone unit 20 within the predetermined period T2 (for example, 1 second).

Each time the input volume level measurement unit 25 measures the input volume level Vin, the input volume level notification unit 26 multicasts an input volume level notification including the measured input volume level Vin and the specification of the ID of one of the wireless speakers 1 that is the output destination of music data from the wireless network interface unit 21.

The main control unit 27 controls the units 20 to 26 of the audio controller 2 in an integrated manner.

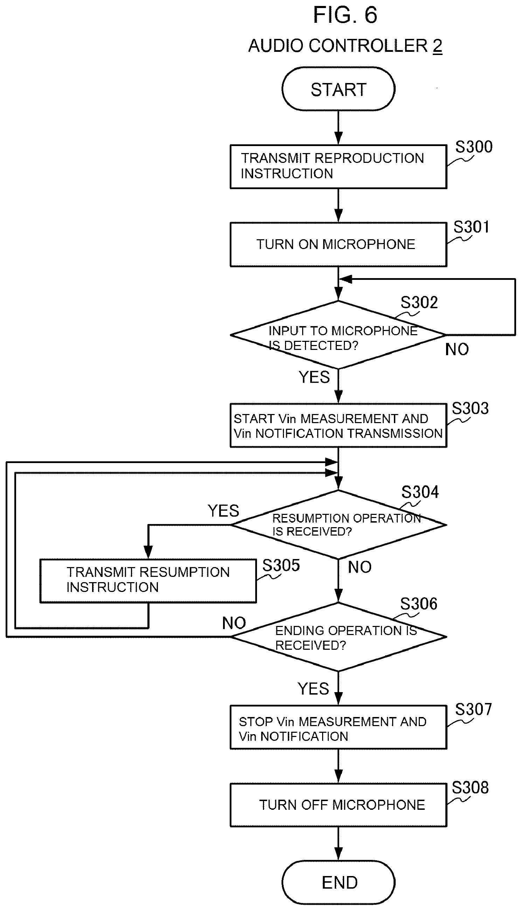

FIG. 6 is a flow chart for illustrating the operation of the audio controller 2. This flow is started when the main control unit 27 receives music selection operation, which involves the specification of music data to be reproduced and the specification of the ID of one of the wireless speakers 1 that is the output destination of the music data, from the listener via the graphical user interface unit 22.

The main control unit 27 first hands over the music data to be reproduced and the ID of the wireless speaker 1 that is the output destination of the music data to the reproduction instruction transmission unit 23. The reproduction instruction transmission unit 23 receives the music data and the ID, and multicasts the reproduction instruction in which the music data to be reproduced and the ID of the wireless speaker 1 that is the output destination of the music data are specified from the wireless network interface unit 21 (Step S300).

The main control unit 27 next turns on the microphone unit 20 (Step S301) and waits for an input of an audio signal to the microphone unit 20 (Step S302) . When an audio signal is input to the microphone unit 20 ("YES" in Step S302), the main control unit 27 instructs the input volume level measurement unit 25 to start measuring the input volume level Vin, and instructs the input volume level notification unit 26 to start transmitting an input volume level notification by notifying the ID of the wireless speaker 1 that is the output destination of the music data to the input volume level notification unit 26. The input volume level measurement unit 25 responds to the instruction by measuring, at the predetermined interval T1, the input volume level Vin, which is an average of input volumes of audio signals that are input to the microphone unit 20 within the predetermined period T2. Each time the input volume level measurement unit 25 measures the input volume level Vin, the input volume level notification unit 26 multicasts an input volume level notification including the measured input volume level Vin and the specification of the ID of the wireless speaker 1 that is the output destination of the music data from the wireless network interface unit 21 (Step S303).

The main control unit 27 subsequently receives resumption operation, which involves the specification of the ID of the wireless speaker 1 that is the output destination of the music data, from the listener via the graphical user interface unit 22 ("YES" in Step S304), and hands over the ID of this output destination wireless speaker 1 to the resumption instruction transmission unit 24. The resumption instruction transmission unit 24 receives the ID, and multicasts a resumption instruction in which the ID of the output destination wireless speaker 1 is specified from the wireless network interface unit 21 (Step S305).

When remote control ending operation for ending the remote control of the relevant wireless speaker 1 is received from the listener via the graphical user interface unit 22 ("YES" in Step S306), the main control unit 27 instructs the input volume level measurement unit 25 to end the measurement of the input volume level Vin, and instructs the input volume level notification unit 26 to end the transmission of an input volume level notification. The input volume level measurement unit 25 ends the measurement of the input volume level Vin in response to the instruction. The input volume level notification unit 26 ends the multicasting of an input volume level notification (Step S307).

The main control unit 27 then turns off the microphone unit 20 (Step S308), and ends this flow.

This concludes a description on the first embodiment of the present invention.

In the first embodiment, the output volume level Vout of audio signals output from the speaker unit 10 of one of the wireless speakers 1 and the input volume level Vin of audio signals input to the microphone unit 20 of the audio controller 2 are compared to determine, from the ratio of the two volume levels, namely, Vin/Vout, whether a listener carrying the audio controller 2 has left the room in which the wireless speaker 1 is installed. When it is determined that the listener has left the room, the output of an audio signal from the wireless speaker 1 is stopped. The output of an audio signal can thus be automatically stopped when a listener leaves a room in which the wireless speaker 1 is currently outputting an audio signal without stopping the output of an audio signal. Power consumption can accordingly be reduced by preventing a useless output of an audio signal.

In the first embodiment, when one of the wireless speakers 1 receives a resumption instruction from the audio controller 2 in a period that follows the stop of the output of an audio signal and that precedes the elapse of the predetermined time-out time T4, the sound volume Vol is returned to a state prior to the stop of the output of an output signal to resume the output of an audio signal. When the time runs out with the elapse of the time-out time T4 without receiving a resumption instruction from the audio controller 2, on the other hand, the reproduction of music data as audio signals is stopped and the wireless speaker 1 is powered off. This enables the listener who carries the audio controller 2 to continue enjoying music data with simple operation when the listener returns to the room in which the wireless speaker 1 is installed shortly after leaving the room, while the wireless speaker 1 can automatically be powered off when the listener leaves the room and does not return. The power consumption of the wireless speaker 1 can consequently be reduced with efficiency.

It is determined in the first embodiment that a listener carrying the audio controller 2 has left a room in which one of the wireless speakers 1 is installed when the volume level ratio Vin/Vout drops by the predetermined value P or more within the predetermined period T3 (Step S113 and Step S120 of FIG. 2 and Step S208 of FIG. 4). However, depending on the performance of the microphone unit 20 of the audio controller 2, it may erroneously be determined that the listener has left the room when the listener intentionally lowers the sound volume of the wireless speaker 1. For that reason, it may be determined that the listener has not left the room even when the volume level ratio Vin/Vout drops by the predetermined value P or more within the predetermined period T3 if the sound volume is less than a predetermined value.

The present invention is not limited to the first embodiment in which the output volume level Vout of audio signals output from the speaker unit 10 of one of the wireless speakers 1 and the input volume level Vin of audio signals input to the microphone unit 20 of the audio controller 2 are compared to determine, from the ratio of the two volume levels, namely, Vin/Vout, whether a listener carrying the audio controller 2 has left the room in which the wireless speaker 1 is installed

In another embodiment of the present invention, each of the wireless speakers 1 measures at the predetermined interval T1 the output waveforms of audio signals output from the speaker unit 10 within the predetermined period T2, and the audio controller 2 measures at the predetermined interval T1 the input waveforms of audio signals input to the microphone unit 20 within the predetermined period T2 to transmit the input waveforms to the wireless speaker 1. The wireless speaker 1 compares the latest output waveform measured and the latest input waveform received from the audio controller 2, and determines whether a listener carrying the audio controller 2 is away from the vicinity of the wireless speaker 1 based on whether a delay time of the input waveform with respect to the output waveform (a phase difference) is equal to more than a predetermined length of time.

### [Second Embodiment]

A wireless audio system according to a second embodiment of the present invention differs from the wireless audio system according to the first embodiment, which is illustrated in FIG. 1, in that wireless speakers 1a-1 to 1a-3 (hereinafter may also simply be referred to as "wireless speaker (s) 1a") are used in place of the wireless speakers 1-1 to 1-3, and in that an audio controller 2a is used in place of the audio controller 2. The rest are the same as in the wireless audio system of the first embodiment illustrated in FIG. 1.

Each of the wireless speakers 1a is connected to the audio controller 2a and the media server 3 via the access point 4, and acquires music data from the media server 3 and reproduces the music data for output in accordance with a reproduction instruction received from the audio controller 2a. The wireless speaker 1a sequentially measures the output volume levels of audio signals output from the wireless speaker 1a within a predetermined period, and transmits the output volume levels to the audio controller 2a, which is the sender of the reproduction instruction. The wireless speaker 1a stops outputting an audio signal by following an output stop instruction issued by the audio controller 2a.

The audio controller 2a is also connected to the wireless speakers 1a and the media server 3 via the access point 4, and transmits the reproduction instruction, which includes the specification of music data selected by a listener from among pieces of music data stored in the media server 3, to one of the wireless speakers 1a that is the output destination of the music data. The audio controller 2a sequentially measures the input volume levels of audio signals input to the microphone within a predetermined period, and sequentially receives the output volume levels of audio signals from the wireless speaker 1a. The audio controller 2a compares the input volume levels and the output volume levels to determine whether a listener carrying the audio controller 2 has left the room in which the wireless speaker 1a is installed. When it is determined that the listener has left the room in which the wireless speaker 1a is installed, the audio controller 2a transmits an audio signal output stop instruction to the wireless speaker 1a that is the output destination of the music data.

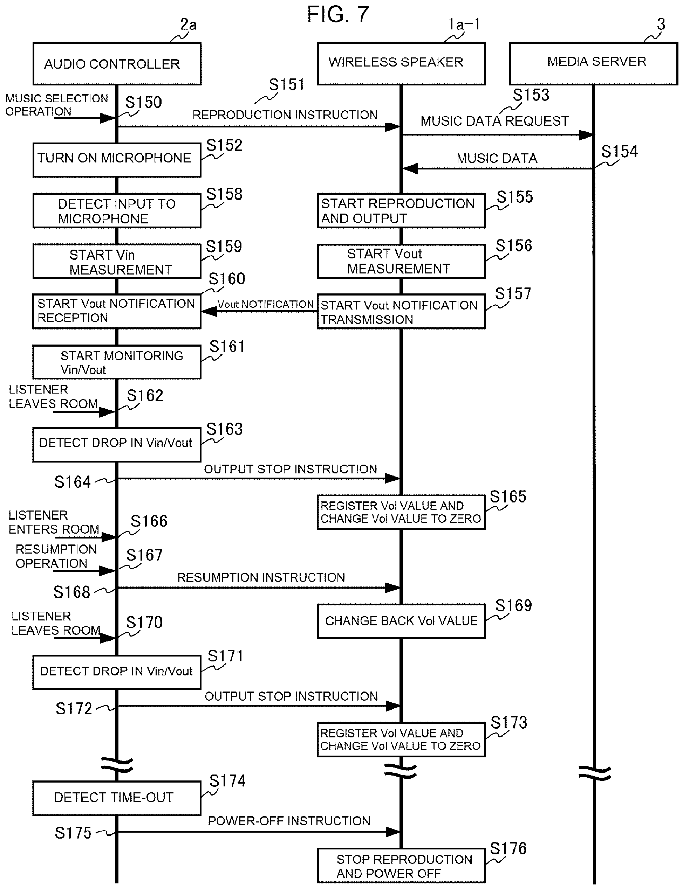

FIG. 7 is a flow chart for illustrating the operation of the wireless audio system according to the second embodiment. The description given here takes as an example a case in which a listener carrying the audio controller 2a enjoys music with the use of the wireless speaker 1a-1 installed in Room A.

First, the audio controller 2a receives from the listener carrying the audio controller 2a and staying in Room A music selection operation, which involves the specification of music data to be reproduced and the specification of the ID of the wireless speaker 1a-1 as the output destination of the music data (Step S150), and multicasts a reproduction instruction in which the music data to be reproduced and the ID of the wireless speaker 1a-1 are specified over the network 5 (Step S151) . The audio controller 2a also turns on the microphone included in the audio controller 2a (Step S152) .

Next, the wireless speaker 1a-1 receives the reproduction instruction in which the ID of the wireless speaker 1a-1 is specified over the network 5, and transmits to the media server 3 a music data request in which the music data specified by the reproduction instruction is specified (Step S153) . The media server 3 receives the request, identifies the music data that is specified in the music data request received from the wireless speaker 1a-1 from among pieces of music data stored in the media server 3, and transmits the identified music data to the wireless speaker 1a-1 (Step S154) . The wireless speaker 1a-1 receives the music data from the media server 3, reproduces the music data as audio signals, and starts outputting the reproduced audio signals (Step S155). The wireless speaker 1a-1 also starts measuring an output volume level Vout of audio signals that are output within the predetermined period T2 (for example, 1 second) at the predetermined interval T1 (for example, a 1-second interval) (Step S156). Each time the output volume level Vout is newly measured, the wireless speaker 1a-1 transmits an output volume level notification (Vout notification) in which the newly measured output volume level Vout is included to the audio controller 2a, which is the sender of the reproduction instruction (Step S157).

Meanwhile, the audio controller 2a detects that an audio signal output from the wireless speaker 1a-1 is input to the microphone, which is included in the audio controller 2a (Step S158), and starts measuring the input volume level Vin of audio signals input to the microphone within the predetermined period T2 at the predetermined interval T1 (Step S159). The audio controller 2a also starts receiving an output volume level notification from the wireless speaker 1-a (Step S160). Each time an output volume level notification is newly received, the audio controller 2a obtains the volume level ratio Vin/Vout, which indicates the proportion of the input volume level Vin newly measured by the audio controller 2a to the output volume level Vout included in the newly received output volume level notification, and monitors a change in the volume level ratio Vin/Vout (Step S161).

At this point, the listener carrying the audio controller 2a leaves Room A (Step S162), thereby causing the input volume level Vin of an audio signal that is input to the microphone of the audio controller 2a to decrease. The volume level ratio Vin/Vout calculated by the audio controller 2a rapidly drops as a result. The audio controller 2a detects that the volume level ratio Vin/Vout has dropped by the predetermined value P (for example, 5 dB) or more within the predetermined period T3 (for example, 4 seconds to 6 seconds) (Step S163), and determines that the listener has left Room A. The audio controller 2a multicasts an output stop instruction specifying the ID of the wireless speaker 1a-1, which is the output destination of the music data (Step S164) . The audio controller 2a subsequently waits for the predetermined time-out time T4 (for example, 3 minutes) to elapse.

The wireless speaker 1a-1 receives the output stop instruction in which the ID of the wireless speaker 1a-1 is specified from the audio controller 2a, registers the value of the sound volume Vol of the wireless speaker la-1 as resumption information, changes the sound volume Vol to a zero value, and stops outputting an audio signal (Step S165). The wireless speaker 1a-1 may stop the measurement of the output volume level Vout at this point.

Next, the listener carrying the audio controller 2a reenters Room A (Step S166). Before the time-out time T4 elapses, the audio controller 2a receives, from the listener, resumption operation, which involves the specification of the ID of the wireless speaker 1a-1 (Step S167), and multicasts a resumption instruction in which the ID of the wireless speaker 1a-1 is specified over the network 5 (Step S168) .

The wireless speaker 1a-1 receives the resumption instruction in which the ID of the wireless speaker 1a-1 is specified from the audio controller 2a, changes the value of the sound volume Vol from the zero value to the value registered as the resumption information, and resumes the output of an audio signal (Step S169) . In the case where the measurement of the volume level Vout has been stopped during the period in which the output of an audio signal is stopped, the wireless speaker 1a-1 resumes the measurement of the output volume level Vout.

Next, the listener carrying the audio controller 2a leaves Room A again (Step S170), thereby causing the input volume level Vin of an audio signal that is input to the microphone of the audio controller 2a to decrease. The volume level ratio Vin/Vout calculated by the audio controller 2a rapidly drops as a result. The audio controller 2a detects that the volume level ratio Vin/Vout has dropped by the predetermined value P or more within the predetermined period T3 (StepS171), and determines that the listener has left Room A. The audio controller 2a multicasts an output stop instruction specifying the ID of the wireless speaker 1a-1, which is the output destination of the music data (Step S172) . The wireless speaker 1a-1 may stop the measurement of the output volume level Vout at this point. The audio controller 2a subsequently waits for the predetermined time-out time T4 (for example, 3 minutes) to elapse.

The wireless speaker 1a-1 receives the output stop instruction in which the ID of the wireless speaker 1a-1 is specified from the audio controller 2a, registers the value of the sound volume Vol of the wireless speaker la-1 as resumption information, changes the sound volume Vol to a zero value, and stops outputting an audio signal (Step S173).

Next, the time-out time T4 elapses without the reentrance of the listener carrying the audio controller 2a to Room A (Step S174), the audio controller 2a multicasts a power-off instruction in which the ID of the wireless speaker 1a-1 is specified over the network 5 (Step 5175).

The wireless speaker 1a-1 receives the power-off instruction in which the ID of the wireless speaker 1a-1 is specified from the audio controller 2a, stops the reproduction of the music data as audio signals, and powers off (Step S176).

The description given next is about details of the wireless speaker 1a and the audio controller 2a of the wireless audio system according to the second embodiment.

The wireless speaker 1a is described first.

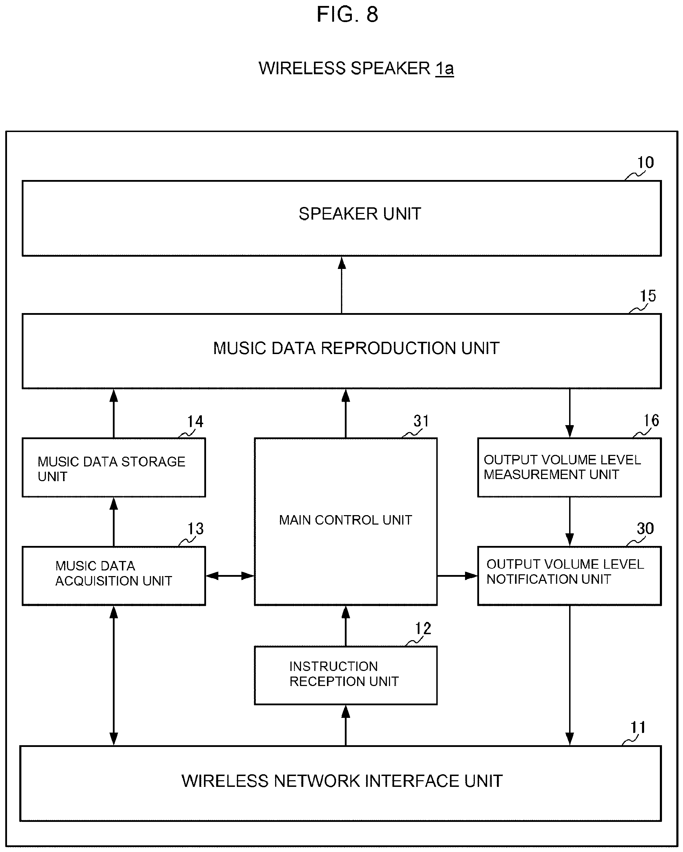

FIG. 8 is a schematic functional block diagram of the wireless speaker 1a. The functional configuration of the wireless speaker 1a illustrated in FIG. 8 is implemented by, for example, a CPU included in a computer along with a memory, an auxiliary storage device, which is a flash memory or the like, a wireless communication device, which is a wireless LAN adapter or the like, and a speaker by loading a predetermined program onto the memory from the auxiliary storage device and executing the program.

As illustrated in FIG. 8, the wireless speaker 1a includes the speaker unit 10, the wireless network interface unit 11, the instruction reception unit 12, the music data acquisition unit 13, the music data storage unit 14, the music data reproduction unit 15, the output volume level measurement unit 16, an output volume level notification unit 30, and a main control unit 31. The units in FIG. 8 that have the same functions as those of the wireless speaker 1 in the first embodiment illustrated in FIG. 3 are denoted by the same reference symbols.

The output volume level notification unit 30 transmits, each time the output volume level measurement unit 16 measures the output volume level Vout, an output volume level notification including the measured output volume level Vout via the wireless network interface unit 11 to the audio controller 2a, which is the sender of a reproduction instruction issued to music data that is currently being reproduced as audio signals by the music data reproduction unit 15.

The main control unit 31 controls the units 10 to 16 and 30 of the wireless speaker 1a in an integrated manner. The main control unit 31 also controls the reproduction/output of music data by the music data reproduction unit 15 and the powering on/off based on instructions received from the audio controller 2a via the instruction reception unit 12.

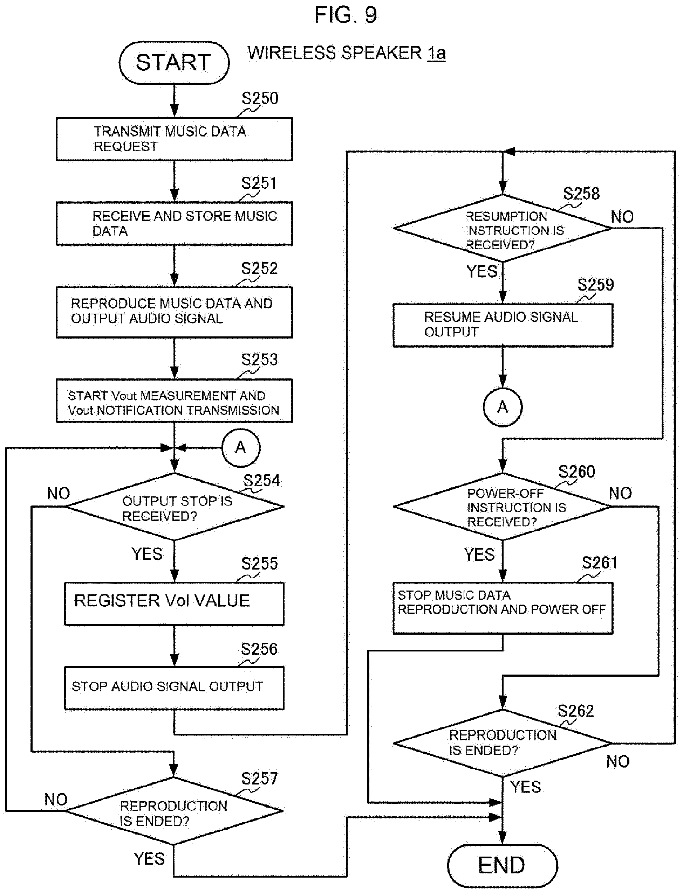

FIG. 9 is a flow chart for illustrating the operation of the wireless speaker 1a. This flow is started when the instruction reception unit 12 receives a reproduction instruction to which the ID of its own wireless speaker 1a is attached from the audio controller 2a via the wireless network interface unit 11.

First, the instruction reception unit 12 hands over the received reproduction instruction to the main control unit 31. The main control unit 31 receives the reproduction instruction, notifies the address of the audio controller 2a, which is the sender of the reproduction instruction, to the output volume level notification unit 30, and notifies music data specified by the received reproduction instruction as data to be reproduced to the music data acquisition unit 13. The music data acquisition unit 13 transmits a music data request in which the specification of the music data notified by the main control unit 31 is included to the media server 3 via the wireless network interface unit 11 (Step S250).

Next, the music data acquisition unit 13 receives the music data from the media server 3, and stores the received music data in the music data storage unit 14 (Step S251) . The music data acquisition unit 13 also notifies the main control unit 31 of the completion of the acquisition of the music data. The main control unit 31 receives the notification, and notifies the music data to be reproduced to the music data reproduction unit 15. The music data reproduction unit 15 reads the music data to be reproduced out of the music data storage unit 14, reproduces the read data as audio signals, and outputs the reproduced audio signals from the speaker unit 10 (Step S252).

When the music data reproduction unit 15 starts reproducing audio signals, the output volume level measurement unit 16 measures at the predetermined interval T1 the output volume level Vout, which is an average of output volumes of audio signals that are output from the speaker unit 10 by the music data reproduction unit 15 within the predetermined period T2. Each time the output volume level measurement unit 16 measures the output volume level Vout, the output volume level notification unit 30 transmits an output volume level notification including the measured output volume level Vout via the wireless network interface unit 11 to the audio controller 2a, which is identified from the address notified by the main control unit 31 (Step S253).

In a subsequent period before the end of the audio signal reproduction by the music data reproduction unit 15 ("NO" in Step S257), the main control unit 31 waits for the reception of an output stop instruction from the audio controller 2a via the wireless network interface unit 11 and the instruction reception unit 12 (Step S254) . The instruction reception unit 12 receives an output stop instruction to which the ID of its own wireless speaker 1a is attached from the audio controller 2a via the wireless network interface unit 11 ("YES" in Step S254), and hands over the received output stop instruction to the main control unit 31. The main control unit 31 receives the output stop instruction, registers the value of the sound volume Vol of the music data reproduction unit 15 as resumption information (Step S255), changes the sound volume Vol of the music data reproduction unit 15 to a zero value, and stops the output of an audio signal from the speaker unit 10 (Step S256) . The output volume level measurement unit 16 may stop the measurement of the output volume level Vout at this point.

In a subsequent period before the end of the audio signal reproduction by the music data reproduction unit 15 ("NO" in Step S262), the main control unit 31 waits for the reception of a resumption instruction or a power-off instruction from the audio controller 2a via the wireless network interface unit 11 and the instruction reception unit 12 (Step S258 and Step S260).

When receiving a resumption instruction to which the ID of its own wireless speaker 1a is attached from the audio controller 2a via the wireless network interface unit 11 ("YES" in Step S258), the instruction reception unit 12 hands over the resumption instruction to the control unit 31. The main control unit 31 receives the resumption instruction, changes the sound volume Vol of the music data reproduction unit 15 from the zero value to the value registered as the resumption information, and resumes the output of an audio signal from the speaker unit 10 (Step S259). In the case where the measurement of the volume level Vout has been stopped during the period in which the output of an audio signal from the speaker unit 10 is stopped, the output volume level measurement unit 16 resumes the measurement of the output volume level Vout. The flow then returns to Step S254.

When receiving a power-off instruction to which the ID of its own wireless speaker 1a is attached from the audio controller 2a via the wireless network interface unit 11 ("YES" in Step S260), the instruction reception unit 12 hands over the power-off instruction to the main control unit 31. The main control unit 31 receives the power-off instruction, causes the music data reproduction unit 15 to stop the reproduction of the music data as audio signals, and then turns off the main power (Step S261) to end this flow.

The main control unit 31 ends this flow also when the audio signal reproduction by the music data reproduction unit 15 is finished ("YES" in Step S257 or "YES" in Step S262).

The audio controller 2a is described next.

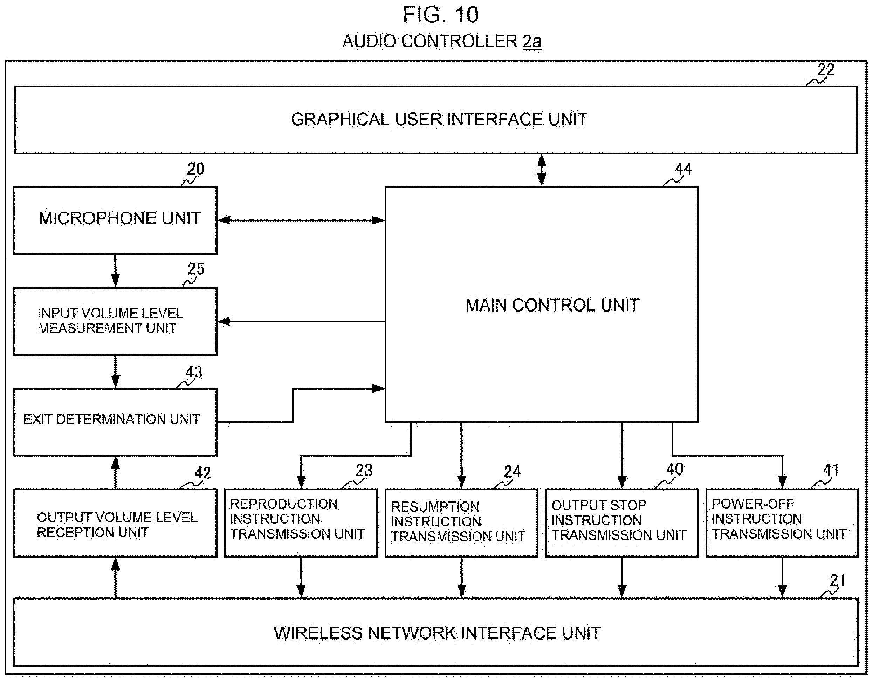

FIG. 10 is a schematic functional block diagram of the audio controller 2a. The functional configuration of the audio controller 2a illustrated in FIG. 10 is implemented by, for example, a CPU included in a portable computer, which is a smartphone, a tablet PC, or the like, along with a memory, an auxiliary storage device, which is a flash memory or the like, a touch panel, a display, an input/output device, which is a pointing device or the like, a wireless communication device, which is a wireless LAN adapter or the like, and a microphone by loading a predetermined program onto the memory from the auxiliary storage device and executing the program.

As illustrated in FIG. 10, the audio controller 2a includes the microphone unit 20, the wireless network interface unit 21, the graphical user interface unit 22, the reproduction instruction transmission unit 23, the resumption instruction transmission unit 24, the input volume level measurement unit 25, an output stop instruction transmission unit 40, a power-off instruction transmission unit 41, an output volume level reception unit 42, an exit determination unit 43, and a main control unit 44. The units in FIG. 10 that have the same functions as those of the audio controller 2 in the first embodiment illustrated in FIG. 5 are denoted by the same reference symbols.

The output stop instruction transmission unit 40 multicasts an output stop instruction including the specification of the ID of one of the wireless speakers 1a that is the output destination of music data from the wireless network interface unit 21.

The power-off instruction transmission unit 41 multicasts a power-off instruction including the specification of the ID of one of the wireless speakers 1a that is the output destination of music data from the wireless network interface unit 21.

The output volume level reception unit 42 receives via the wireless network interface unit 21 an output volume level notification, which is transmitted regularly from each of the wireless speakers 1a.

The exit determination unit 43 obtains, each time the output volume level reception unit 42 newly receives an output volume level notification, the volume level ratio Vin/Vout, which indicates the proportion of the latest input volume level Vin measured by the input volume level measurement unit 25 to the output volume level Vout included in the received output volume level notification. Based on a change in the volume level ratio Vin/Vout, the exit determination unit 43 determines whether a listener carrying the audio controller 2a has left the room in which one of the wireless speakers 1a that is the output destination of music data is installed.

The main control unit 44 controls the units 20 to 25 and 40 to 43 of the audio controller 2a in an integrated manner.

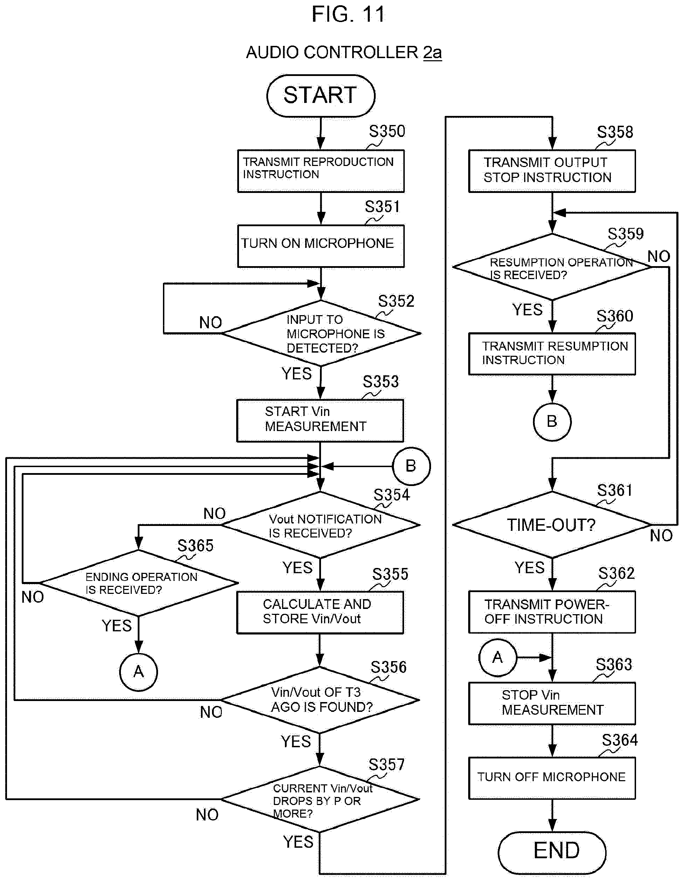

FIG. 11 is a flow chart for illustrating the operation of the audio controller 2a. This flow is started when the main control unit 44 receives music selection operation, which involves the specification of music data to be reproduced and the specification of the ID of one of the wireless speakers 1a that is the output destination of the music data, from the listener via the graphical user interface unit 22.

The main control unit 44 first hands over the music data to be reproduced and the ID of the wireless speaker 1a that is the output destination of the music data to the reproduction instruction transmission unit 23. The reproduction instruction transmission unit 23 receives the music data and the ID, and multicasts a reproduction instruction in which the music data to be reproduced and the ID of the wireless speaker 1a that is the output destination of the music data are specified from the wireless network interface unit 21 (Step S350).

The main control unit 44 next turns on the microphone unit 20 (Step S351) and waits for an input of an audio signal to the microphone unit 20 (Step S352) . When an audio signal is input to the microphone unit 20 ("YES" in Step S352), the main control unit 44 instructs the input volume level measurement unit 25 to start measuring the input volume level Vin. The input volume level measurement unit 25 responds to the instruction by measuring, at the predetermined interval T1, the input volume level Vin, which is an average of input volumes of audio signals that are input to the microphone unit 20 within the predetermined period T2 (Step S353) .

Next, the output volume level reception unit 42 receives an output volume level notification (Vout notification), which is transmitted regularly from the wireless speaker 1a, via the wireless network interface unit 21 ("YES" in Step S354), and hands over the output volume level Vout included in the output volume level notification to the exit determination unit 43. The exit determination unit 43 receives the output volume level Vout, and calculates and stores the volume level ratio Vin/Vout, which indicates the proportion of the latest input volume level Vin measured by the input volume level measurement unit 25 to the output volume level Vout received from the output volume level reception unit 42 (Step S355).

The exit determination unit 43 then determines whether a volume level ratio Vin/Vout calculated at a point that goes back by the predetermined period T3 (for example, 4 seconds to 6 seconds) is stored (Step S356). When it is determined that a volume level ratio Vin/Vout calculated at a point that goes back by the predetermined period T3 is not stored ("NO" in Step S356), the flow returns to Step S354.

When it is determined that a volume level ratio Vin/Vout calculated at a point that goes back by the predetermined period T3 is stored ("YES" in Step S356), on the other hand, the exit determination unit 43 compares the volume level ratio Vin/Vout calculated at a point that goes back by the predetermined period T3 and the newly calculated volume level ratio Vin/Vout to determine whether the newly calculated volume level ratio Vin/Vout is lower than the volume level ratio Vin/Vout calculated at a point that goes back by the predetermined period T3 by the predetermined value P (for example, 5 dB) or more (Step S357) . When the newly calculated volume level ratio Vin/Vout is not lower than the volume level ratio Vin/Vout calculated at a point that goes back by the predetermined period T3 by the predetermined value P or more ("NO" in Step S357), the flow returns to Step S354.

When the newly calculated volume level ratio Vin/Vout is lower than the volume level ratio Vin/Vout calculated at a point that goes back by the predetermined period T3 by the predetermined value P or more ("YES" in Step S357), on the other hand, the exit determination unit 43 notifies the main control unit 44 of that fact. In response to the notification, the main control unit 44 notifies the ID of the wireless speaker 1a that is the output destination of the music data to the output stop instruction transmission unit 40. The output stop instruction transmission unit 40 multicasts an output stop instruction in which the ID of the output destination wireless speaker 1a is specified from the wireless network interface unit 21 (Step S358). The input volume level measurement unit 25 may stop the measurement of the input volume level Vin at this point.

In a subsequent period before the time runs out with the elapse of the predetermined time-out time T4 (for example, 3 minutes) ("NO" in Step S361), the main control unit 44 waits for the reception of resumption operation from the listener via the graphical user interface unit 22 (Step S359).

The main control unit 44 subsequently receives resumption operation from the listener via the graphical user interface unit 22 ("YES" in Step S359), and notifies the ID of the wireless speaker 1a that is the output destination of the music data to the resumption instruction transmission unit 24. The resumption instruction transmission unit 24 multicasts a resumption instruction in which the ID of the wireless speaker 1a that is the output destination of the music data is specified from the wireless network interface unit 21 (Step S360). In the case where the measurement of the input volume level Vin has been stopped, the input volume level measurement unit 25 resumes the measurement of the input volume level Vin. The flow then returns to Step S354.

When the time runs out with the elapse of the time-out time T4 ("YES" in Step S361) without receiving resumption operation from the listener ("NO" in Step S359), on the other hand, the main control unit 44 notifies the ID of the wireless speaker 1a that is the output destination of the music data to the power-off instruction transmission unit 41. The power-off instruction transmission unit 41 multicasts a power-off instruction in which the ID of the output destination wireless speaker 1a is specified from the wireless network interface unit 21 (Step S362) . The main control unit 44 then instructs the input volume level measurement unit 25 to end the measurement of the input volume level Vin. The input volume level measurement unit 25 ends the measurement of the input volume level Vin in response to the instruction (Step S363) . The main control unit 44 then turns off the microphone unit 20 (Step S364), and ends this flow.

When remote control ending operation for ending the remote control of the relevant wireless speaker 1a is received from the listener via the graphical user interface unit 22 ("YES" in Step S365), the main control unit 44 instructs the input volume level measurement unit 25 to end the measurement of the input volume level Vin. The input volume level measurement unit 25 ends the measurement of the input volume level Vin in response to the instruction (Step S363). The main control unit 44 then turns off the microphone unit 20 (Step S364), and ends this flow.

This concludes a description on the second embodiment of the present invention.

Also in the second embodiment, in the same manner as in the first embodiment, the output volume level Vout of audio signals output from the speaker unit 10 of one of the wireless speakers 1a and the input volume level Vin of audio signals input to the microphone unit 20 of the audio controller 2a are compared to determine, from the ratio of the two volume levels, namely, Vin/Vout, whether a listener carrying the audio controller 2a has left the room in which the wireless speaker 1a is installed. When it is determined that the listener has left the room, the output of an audio signal from the wireless speaker 1a is stopped. The output of an audio signal can thus be automatically stopped when a listener leaves a room in which the wireless speaker 1a is currently outputting an audio signal without stopping the output of an audio signal. Power consumption can accordingly be reduced by preventing a useless output of an audio signal.

The audio controller 2a in the second embodiment transmits a resumption instruction for causing one of the wireless speakers 1a to resume the output of an audio signal when receiving resumption operation from the listener in a period that follows the transmission of an output stop instruction for causing the wireless speaker 1a to stop the output of an audio signal and that precedes the elapse of the predetermined time-out time T4. When the time runs out with the elapse of the time-out time T4 without receiving resumption operation from the listener, on the other hand, the audio controller 2a transmits a power-off instruction for causing the wireless speaker 1a to stop the reproduction of music data as audio signals and to power off. This enables the listener who carries the audio controller 2a to continue enjoying music data with simple operation when the listener returns to the room in which the wireless speaker 1a is installed shortly after leaving the room, while the wireless speaker 1a can automatically be powered off when the listener leaves the room and does not return. The power consumption of the wireless speaker 1a can consequently be reduced with efficiency.

Also in the second embodiment, in the same manner as in the first embodiment, it is determined that a listener carrying the audio controller 2a has left a room in which one of the wireless speakers 1a is installed when the volume level ratio Vin/Vout drops by the predetermined value P or more within the predetermined period T3 (Step S163 and Step S171 of FIG. 7 and Step S357 of FIG. 11). However, as described in the first embodiment, depending on the performance of the microphone unit 20 of the audio controller 2a, it may erroneously be determined that the listener has left the room when the listener intentionally lowers the sound volume of the wireless speaker 1a. For that reason, it may be determined that the listener has not left the room even when the volume level ratio Vin/Vout drops by the predetermined value P or more within the predetermined period T3 if the sound volume is less than a predetermined value.

Also in the second embodiment, in the same manner as in the first embodiment, the output volume level Vout of audio signals output from the speaker unit 10 of one of the wireless speakers 1a and the input volume level Vin of audio signals input to the microphone unit 20 of the audio controller 2a are compared to determine, from the ratio of the two volume levels, namely, Vin/Vout, whether a listener carrying the audio controller 2a has left the room in which the wireless speaker 1a is installed. However, the present invention is not limited thereto.

In another embodiment of the present invention, each of the wireless speakers 1a measures at the predetermined interval T1 the output waveforms of audio signals output from the speaker unit 10 within the predetermined period T2 to transmit the output waveforms to the audio controller 2a, and the audio controller 2a measures at the predetermined interval T1 the input waveforms of audio signals input to the microphone unit 20 within the predetermined period T2. The audio controller 2a compares the latest input waveform measured and the latest output waveform received from the wireless speaker 1a, and determines whether a listener carrying the audio controller 2a is away from the vicinity of the wireless speaker 1a based on whether a delay time of the input waveform with respect to the output waveform (a phase difference) is equal to more than a predetermined length of time.

For example, while the audio controller 2 or 2a in the embodiments described above multicasts various instructions to the wireless speakers 1 or the wireless speakers 1a, the multicast transmission may be replaced with unicast transmission when the audio controller 2 or 2a is aware of the address of each wireless speaker 1 or each wireless speaker 1a.

The audio controller 2 or 2a in the embodiments described above is connected to the wireless speakers 1 or the wireless speakers 1a via the access point 4 and the network 5. However, the present invention is not limited thereto. The audio controller 2 or 2a and the wireless speakers 1 or the wireless speakers 1a may be connected directly by a wireless network through an ad-hoc mode of wireless LAN, Bluetooth (trademark), or other types of short-distance wireless communication.

In the embodiments described above, the media server 3 is connected to the network 5, but the media server 3 may be connected to a wireless network. The media server 3 may be built into the audio controller 2 or 2a, or into any one of the wireless speakers 1 or wireless speakers 1a. When the media server 3 is built into the audio controller 2 or 2a, the wireless speaker 1 or 1a acquires music data from the audio controller 2 or 2a. When the media server 3 is built into any one of the wireless speakers 1 or wireless speakers 1a, another wireless speaker 1 or 1a acquires music data from the wireless speaker 1 or 1a into which the media server 3 is built.

### Reference Signs List

1, 1a, 1-1 to 1-3, 1a-1 to 1a-3: wireless speaker, 2, 2a: audio controller, 3: media server, 4: access point, 5: network, 10: speaker unit, 11: wireless network interface unit, 12: instruction reception unit, 13: music data acquisition unit, 14: music data storage unit, 15: music data reproduction unit, 16: output volume level measurement unit, 17: input volume level reception unit, 18, 43: exit determination unit, 19, 27, 31, 44: main control unit 20: microphone unit, 21: wireless network interface unit, 22: graphical user interface unit, 23: reproduction instruction transmission unit, 24: resumption instruction transmission unit, 25: input volume level measurement unit, 26: input volume level notification unit, 30: output volume level notification unit, 40: output stop instruction transmission unit, 41: power-off instruction transmission unit, 42: output volume level reception unit

## Claims

1. A wireless speaker (1), which is configured to communicate with a controller (2) and to reproduce and output an audio signal in accordance with remote operation performed on the controller (2), the wireless speaker comprising:
output characteristic measurement means (16) for sequentially measuring output characteristics of audio signals that are output within a predetermined period,
wherein the output characteristic measurement means (16) is configured to sequentially measure, as the output characteristic, output volume levels of audio signals that are output within the predetermined period from the wireless speaker (1);
input characteristic reception means (17) for sequentially receiving, from the controller, input characteristics of audio signals that are input within the predetermined period to a microphone (20), which is included in the controller,
wherein the input characteristic reception unit (17) is configured to sequentially receive, as the input characteristic, input volume levels of audio signals that are input within the predetermined period to the microphone (20) included in the controller (2);
determination means (18) for comparing the latest output characteristic measured by the output characteristic measurement means (16) and the latest input characteristic received by the input characteristic reception means (17),
wherein the determination means (18) is configured to determine that the listener is away from the vicinity of the wireless speaker (1) when a ratio of the latest input volume level received by the input characteristic reception means (17) to the latest output volume level measured by the output characteristic measurement means (16) drops by a predetermined value or more; and
control means (19) for stopping output of an audio signal when the determination means (18) determines that the listener is away from the vicinity of the wireless speaker (1).

2. A wireless speaker (1), which is configured to communicate with a controller (2) and to reproduce and output an audio signal in accordance with remote operation performed on the controller (2), the wireless speaker comprising:
output characteristic measurement means (16) for sequentially measuring output characteristics of audio signals that are output within a predetermined period,
wherein the output characteristic measurement means (16) is configured to sequentially measure, as the output characteristic, output waveforms of audio signals that are output within the predetermined period from the wireless speaker (1);
input characteristic reception means (17) for sequentially receiving, from the controller, input characteristics of audio signals that are input within the predetermined period to a microphone (20), which is included in the controller,
wherein the input characteristic reception unit (17) is configured to sequentially receive, as the input characteristic, input waveforms of audio signals that are input within the predetermined period to the microphone (20) included in the controller (2);
determination means (18) for comparing the latest output characteristic measured by the output characteristic measurement means (16) and the latest input characteristic received by the input characteristic reception means (17),
wherein the determination means (18) is configured to determine that the listener is away from the vicinity of the wireless speaker (1) when a delay time of the latest input waveform received by the input characteristic reception means (17) with respect to the latest output waveform measured by the output characteristic measurement means (16) is equal to or more than a predetermined length of time; and
control means (19) for stopping output of an audio signal when the determination means (18) determines that the listener is away from the vicinity of the wireless speaker (1).

3. A wireless speaker according to claim 1 or 2, further comprising resumption instruction reception means for receiving (12) a resumption instruction from the controller (2),
wherein the control means (19) is configured to:
store a set value of a sound volume as a resumption level when the determination means (18) determines that the listener is away from the vicinity of the wireless speaker (1), and stop the output of an audio signal by changing the set value of the sound volume to a zero level; and
change the set value of the sound volume from the zero level to the resumption level when the resumption instruction reception means (12) receives the resumption instruction within a predetermined time-out time since the stop of the output of an audio signal, and stop the reproduction of audio signals when the resumption instruction is not received.

4. A controller (2a), which is configured to communicate with a wireless speaker (1a) and to remotely operate the wireless speaker configured to reproduce and output an audio signal, the controller comprising:
a microphone (20);
input characteristic measurement means (25) for sequentially measuring input characteristics of audio signals that are input to the microphone (20) within a predetermined period,
wherein the input characteristic measurement means (25) is configured to sequentially measure, as the input characteristics, input volume levels of audio signals that are input to the microphone unit (20) within the predetermined period;
output characteristic reception means (42) for sequentially receiving, from the wireless speaker (1a), output characteristics of audio signals that are output from the wireless speaker (1a) within the predetermined period,
wherein the output characteristic reception unit (42) is configured to sequentially receive, as the output characteristics, output volume levels of audio signals that are output from the wireless speaker (1a) within the predetermined period;
determination means (43) for comparing the latest output characteristic received by the output characteristic reception means (42) and the latest input characteristic measured by the input characteristic measurement means (25),
wherein the determination means (43) is configured to determine that the listener is away from the vicinity of the wireless speaker when a ratio of the latest input volume level measured by the input characteristic measurement means (25) to the latest output volume level received by the output characteristic reception means (42) drops by a predetermined value or more; and
output stop instruction transmission means (40) for transmitting, to the wireless speaker (1a), an output stop instruction for stopping output of an audio signal when the determination means (43) determines that the listener is away from the vicinity of the wireless speaker (1a).

5. A controller (2a), which is configured to communicate with a wireless speaker (1a) and to remotely operate the wireless speaker configured to reproduce and output an audio signal, the controller comprising:
a microphone (20);
input characteristic measurement means (25) for sequentially measuring input characteristics of audio signals that are input to the microphone (20) within a predetermined period,
wherein the input characteristic measurement means (25) is configured to sequentially measure, as the input characteristics, input waveforms of audio signals that are input to the microphone unit (20) within the predetermined period;
output characteristic reception means (42) for sequentially receiving, from the wireless speaker (1a), output characteristics of audio signals that are output from the wireless speaker (1a) within the predetermined period,
the output characteristic reception unit (42) is configured to sequentially receive, as the output characteristics, output waveforms of audio signals that are output from the wireless speaker within the predetermined period;
determination means (43) for comparing the latest output characteristic received by the output characteristic reception means (42) and the latest input characteristic measured by the input characteristic measurement means (25),
the determination means (43) is configured to determine that the listener is away from the vicinity of the wireless speaker when a delay time of the latest input waveform measured by the input characteristic measurement means (25) with respect to the latest output waveform received by the output characteristic reception means (42) is equal to or more than a predetermined length of time; and
output stop instruction transmission means (40) for transmitting, to the wireless speaker (1a), an output stop instruction for stopping output of an audio signal when the determination means (43) determines that the listener is away from the vicinity of the wireless speaker (1a).

6. A controller according to claim 4 or 5, further comprising:
resumption instruction transmission means (24) for transmitting, to the wireless speaker (1a), in accordance with an instruction issued by the listener, a resumption instruction for resuming the output of an audio signal that has been stopped by the output stop instruction transmitted from the output stop instruction transmission means (40); and
power-off instruction transmission means (41) for transmitting, to the wireless speaker, a power-off instruction for powering off the wireless speaker when time runs out with an elapse of a predetermined time-out time in a period that follows the transmission of the output stop instruction from the output stop instruction transmission means (40), without transmission of the resumption instruction from the resumption instruction transmission means (24).

7. A wireless audio system, comprising:
the wireless speaker (1) of any one of claims 1 to 3; and
a controller (2) configured to remotely operate the wireless speaker,
wherein the controller includes:
a microphone (20);
input characteristic measurement means (25) for sequentially measuring input characteristics of audio signals that are input to the microphone within the predetermined period; and
input characteristic transmission means (21) for sequentially transmitting, to the wireless speaker (1), the input characteristics sequentially measured by the input characteristic measurement means (25).

8. A wireless audio system, comprising:
a wireless speaker (1a) configured to reproduce and output an audio signal; and
the controller (2a) of any one of claims 4 to 6, which is configured to remotely operate the wireless speaker,
wherein the wireless speaker includes:
output characteristic measurement means (16) for sequentially measuring output characteristics of audio signals that are output from the wireless speaker within the predetermined period; and
output characteristic transmission means (11) for sequentially transmitting, to the controller (2a), the output characteristics sequentially measured by the output characteristic measurement means (16).

9. A program readable by a computer, for causing the computer to function as a wireless speaker (1) according to any of claims 1 to 3.

10. A program readable by a computer, for causing the computer to function as a controller (2a) according to any of claims 4 to 6.

## Patentansprüche

1. Drahtlos-Lautsprecher (1), der ausgelegt ist, um mit einer Steuervorrichtung (2) zu kommunizieren und ein Audiosignal gemäß einem durch die Steuervorrichtung (2) durchgeführten Fern-Betrieb nachzubilden und auszugeben, wobei der Drahtlos-Lautsprecher Folgendes umfasst:
ein Ausgabecharakteristik-Messmittel (16) zum sequentiellen Messen der Ausgabecharakteristika von Audiosignalen, die innerhalb einer vorgegebenen Zeitspanne ausgegeben werden,
wobei das Ausgabecharakteristik-Messmittel (16) ausgelegt ist, Ausgabe-Lautstärkepegel von Audiosignalen, die innerhalb der vorgegebenen Zeitspanne von dem Drahtlos-Lautsprecher (1) ausgegeben werden, sequentiell als die Ausgabecharakteristik zu messen;
ein Eingabecharakteristik-Empfangsmittel (17), um von der Steuervorrichtung Eingabecharakteristika von Audiosignalen sequentiell zu empfangen, die innerhalb der vorgegebenen Zeitspanne in ein Mikrophon (20), das in der Steuervorrichtung enthalten ist, eingegeben werden,
wobei die Eingabecharakteristik-Empfangseinheit (17) ausgelegt ist, um Eingabe-Lautstärkepegel von Audiosignalen, die innerhalb der vorgegebenen Zeitspanne in das Mikrophon (20), das in der Steuervorrichtung (2) enthalten ist, eingegeben werden, sequentiell als die Eingabecharakteristik zu empfangen;
ein Bestimmungsmittel (18) zum Vergleichen der aktuellen Ausgabecharakteristik, die durch das Ausgabecharakteristik-Messmittel (16) gemessen wurde, und der aktuellen Eingabecharakteristik, die von dem Eingabecharakteristik-Empfangsmittel (17) empfangen wurde,
wobei das Bestimmungsmittel (18) ausgelegt ist, um zu bestimmen, dass sich der Zuhörer nicht in der Nähe des Drahtlos-Lautsprechers (1) befindet, wenn ein Verhältnis des aktuellen Eingabe-Lautstärkepegels, der durch das Eingabecharakteristik-Empfangsmittel (17) empfangen wurde, und des aktuellen Ausgabe-Lautstärkepegels, der durch das Ausgabecharakteristik-Messmittel (16) gemessen wurde, um einen vorbestimmten Wert oder mehr abfällt; und
ein Steuermittel (19) zum Stoppen der Ausgabe eines Audiosignals, wenn das Bestimmungsmittel (18) bestimmt, dass sich der Zuhörer nicht in der Nähe des Drahtlos-Lautsprechers (1) befindet.

2. Drahtlos-Lautsprecher (1), der ausgelegt ist, um mit einer Steuervorrichtung (2) zu kommunizieren und ein Audiosignal gemäß einem durch die Steuervorrichtung (2) durchgeführten Fern-Betrieb nachzubilden und auszugeben, wobei der Drahtlos-Lautsprecher Folgendes umfasst:
ein Ausgabecharakteristik-Messmittel (16) zum sequentiellen Messen der Ausgabecharakteristika von Audiosignalen, die innerhalb einer vorgegebenen Zeitspanne ausgegeben werden,
wobei das Ausgabecharakteristik-Messmittel (16) ausgelegt ist, um Ausgabe-Wellenformen von Audiosignalen, die innerhalb der vorgegebenen Zeitspanne von dem Drahtlos-Lautsprecher (1) ausgegeben werden, als die Ausgabecharakteristik zu messen;
ein Eingabecharakteristik-Empfangsmittel (17), um von der Steuervorrichtung Eingabecharakteristika von Audiosignalen sequentiell zu empfangen, die innerhalb der vorgegebenen Zeitspanne in ein Mikrophon (20), das in der Steuervorrichtung enthalten ist, eingegeben werden,
wobei die Eingabecharakteristik-Empfangseinheit (17) ausgelegt ist, um Eingabe-Wellenformen von Audiosignalen, die innerhalb der vorgegebenen Zeitspanne in das Mikrophon (20), das in der Steuervorrichtung (2) enthalten ist, eingegeben werden, sequentiell als die Eingabecharakteristik zu empfangen;
ein Bestimmungsmittel (18) zum Vergleichen der aktuellen Ausgabecharakteristik, die durch das Ausgabecharakteristik-Messmittel (16) gemessen wurde, und der aktuellen Eingabecharakteristik, die von dem Eingabecharakteristik-Empfangsmittel (17) empfangen wurde,
wobei das Bestimmungsmittel (18) ausgelegt ist, um zu bestimmen, dass sich der Zuhörer nicht in der Nähe des Drahtlos-Lautsprechers (1) befindet, wenn eine Verzögerungszeit der aktuellen Eingabe-Wellenform, die durch das Eingabecharakteristik-Empfangsmittel (17) empfangen wurde, in Bezug auf die aktuelle Ausgabe-Wellenform, die durch das Ausgabecharakteristik-Messmittel (16) gemessen wurde, gleich oder länger als eine vorgegebenen Zeitspanne ist; und
ein Steuermittel (19) zum Stoppen der Ausgabe eines Audiosignals, wenn das Bestimmungsmittel (18) bestimmt, dass sich der Zuhörer nicht in der Nähe des Drahtlos-Lautsprechers (1) befindet.

3. Drahtlos-Lautsprecher nach Anspruch 1 oder 2, ferner umfassend ein Wiederaufnahmeanweisungs-Empfangsmittel zum Empfangen (12) einer Wiederaufnahmeanweisung von der Steuervorrichtung (2),
wobei das Steuermittel (19) ausgelegt ist, um:
einen eingestellten Wert einer Schalllautstärke als Wiederaufnahmepegel zu speichern, wenn das Bestimmungsmittel (18) bestimmt, dass sich der Zuhörer nicht in der Nähe des Drahtlos-Lautsprechers (1) befindet, und die Ausgabe eines Audiosignals zu stoppen, indem der eingestellte Wert der Schalllautstärke auf einen Nullpegel geändert wird; und
den eingestellten Wert der Schalllautstärke von einem Nullpegel auf den Wiederaufnahmepegel zu ändern, wenn die Wiederaufnahmeanweisungs-Empfangseinrichtung (12) die Wiederaufnahmeanweisung innerhalb einer vorgegebenen Unterbrechungszeit ab dem Ausgabestopp eines Audiosignals empfängt, und das Nachbilden des Audiosignals zu stoppen, wenn die Wiederaufnahmeanweisung nicht empfangen wurde.

4. Steuervorrichtung (2a), die ausgelegt ist, um mit einem Drahtlos-Lautsprecher (1a) zu kommunizieren und den Drahtlos-Lautsprecher, der ausgelegt ist, um ein Audiosignal nachzubilden und auszugeben, aus der Ferne zu betreiben, wobei die Steuervorrichtung Folgendes umfasst:
ein Mikrophon (20);
ein Eingabecharakteristik-Messmittel (25), um Eingabecharakteristika von Audiosignalen, die innerhalb der vorgegebenen Zeitspanne in das Mikrophon (20) eingegeben werden, sequentiell zu messen,
wobei das Eingabecharakteristik-Messmittel (25) ausgelegt ist, um Eingabe-Lautstärkepegel von Audiosignalen, die innerhalb der vorgegebenen Zeitspanne in die Mikrophoneinheit (20) eingegeben werden, sequentiell als die Eingabecharakteristik zu messen;
ein Ausgabecharakteristik-Empfangsmittel (42), um Ausgabecharakteristika von Audiosignalen, die von dem Drahtlos-Lautsprecher (1a) innerhalb der vorgegebenen Zeitspanne ausgegeben werden, von dem Drahtlos-Lautsprecher (1a) sequentiell zu empfangen,
wobei die Ausgabecharakteristik-Empfangseinheit (42) ausgelegt ist, um Ausgabe-Lautstärkepegel von Audiosignalen, die von dem Drahtlos-Lautsprecher (1a) innerhalb der vorgegebenen Zeitspanne ausgegeben werden, sequentiell als die Ausgabecharakteristika zu empfangen;
ein Bestimmungsmittel (43) zum Vergleichen der aktuellen Ausgabecharakteristik, die durch das Ausgabecharakteristik-Empfangsmittel (42) empfangen wurde, und der aktuellen Eingabecharakteristik, die durch das Eingabecharakteristik-Messmittel (25) gemessen wurde,
wobei das Bestimmungsmittel (43) ausgelegt ist, um zu bestimmen, dass der Zuhörer sich nicht in der Nähe das Drahtlos-Lautsprechers befindet, wenn ein Verhältnis des aktuellen Eingabe-Lautstärkenpegels, der durch das Eingabecharakteristik-Messmittel (25) gemessen wurde, mit dem aktuellen Ausgabe-Lautstärkepegel, der durch das Ausgabecharakteristik-Empfangsmittel (42) empfangen wurde, um einen vorgegebenen Wert oder mehr abfällt; und
ein Ausgabestoppanweisungs-Sendemittel (40) zum Senden einer Ausgabestoppanweisung zum Stoppen der Ausgabe eines Audiosignals an den Drahtlos-Lautsprecher (1a), wenn das Bestimmungsmittel (43) bestimmt, dass der Zuhörer sich nicht in der Nähe des Drahtlos-Lautsprechers (1a) befindet.

5. Steuervorrichtung (2a), die ausgelegt ist, um mit einem Drahtlos-Lautsprecher (1a) zu kommunizieren und den Drahtlos-Lautsprecher, der ausgelegt ist, um ein Audiosignal nachzubilden und auszugeben, aus der Ferne zu betreiben, wobei die Steuervorrichtung Folgendes umfasst:
ein Mikrophon (20);
ein Eingabecharakteristik-Messmittel (25), um Eingabecharakteristika von Audiosignalen, die innerhalb der vorgegebenen Zeitspanne in das Mikrophon (20) eingegeben werden, sequentiell zu messen,
wobei das Eingabecharakteristik-Messmittel (25) ausgelegt ist, um Eingabe-Wellenformen von Audiosignalen, die innerhalb der vorgegebenen Zeitspanne in die Mikrophoneinheit (20) eingegeben werden, sequentiell als die Eingabecharakteristik zu messen;
ein Ausgabecharakteristik-Empfangsmittel (42), um Ausgabecharakteristika von Audiosignalen, die von dem Drahtlos-Lautsprecher (1a) innerhalb der vorgegebenen Zeitspanne ausgegeben werden, sequentiell von dem Drahtlos-Lautsprecher (1a) zu empfangen,
wobei die Ausgabecharakteristik-Empfangseinheit (42) ausgelegt ist, um Ausgabe-Wellenformen von Audiosignalen, die von dem Drahtlos-Lautsprecher innerhalb der vorgegebenen Zeitspanne ausgegeben werden, sequentiell als Ausgabecharakteristika zu empfangen;
ein Bestimmungsmittel (43) zum Vergleichen der aktuellen Ausgabecharakteristik, die durch das Ausgabecharakteristik-Empfangsmittel (42) empfangen wurde, und der aktuellen Eingabecharakteristik, die durch das Eingabecharakteristik-Messmittel (25) gemessen wurde,
wobei das Bestimmungsmittel (43) ausgelegt ist, um zu bestimmen, dass der Zuhörer sich nicht in der Nähe das Drahtlos-Lautsprechers befindet, wenn eine Verzögerungszeit der aktuellen Eingabe-Wellenform, die durch das Eingabecharakteristik-Messmittel (25) gemessen wurde, in Bezug auf die aktuelle Ausgabe-Wellenform, die durch das Ausgabecharakteristik-Messmittel (42) empfangen wurde, gleich oder länger als eine vorgegebene Zeitspanne ist; und
ein Ausgabestoppanweisungs-Sendemittel (40) zum Senden einer Ausgabestoppanweisung zum Stoppen der Ausgabe eines Audiosignals an den Drahtlos-Lautsprecher (1a), wenn das Bestimmungsmittel (43) bestimmt, dass der Zuhörer sich nicht in der Nähe des Drahtlos-Lautsprechers (1a) befindet.

6. Steuervorrichtung nach Anspruch 4 oder 5, ferner umfassend:
ein Wiederaufnahmeanweisungs-Sendemittel (24) zum Senden einer Wiederaufnahmeanweisung gemäß einer von dem Zuhörer abgegebenen Anweisung zum Wiederaufnehmen der Ausgabe eines Audiosignals an den Drahtlos-Lautsprecher (1a), das durch die Ausgabestoppanweisung, die von dem Ausgabestopp-Sendemittel (40) gesendet wurde, gestoppt wurde; und
ein Ausschaltanweisungs-Sendemittel (41) zum Senden einer Ausschaltanweisung zum Ausschalten des Drahtlos-Lautsprechers an den Drahtlos-Lautsprecher, wenn die Zeit mit dem Ablauf einer vorbestimmten Unterbrechungszeit in einer Zeitspanne abläuft, die dem Senden der Ausgabestoppanweisung von dem Ausgabestoppanweisungs-Sendemittel (40) folgt, ohne dass die Wiederaufnahmeanweisung von dem Wiederaufnahmeanweisungs-Sendemittel (24) gesendet wird.

7. Drahtlos-Audiosystem, umfassend:
den Drahtlos-Lautsprecher (1) nach einem der Ansprüche 1 bis 3; und
eine Steuervorrichtung (2), die ausgelegt ist, um den Drahtlos-Lautsprecher aus der Ferne zu betreiben,
wobei die Steuervorrichtung Folgendes umfasst:
ein Mikrophon (20);
ein Eingabecharakteristik-Messmittel (25), um Eingabecharakteristika von Audiosignalen, die innerhalb der vorgegebenen Zeitspanne in das Mikrophon eingegeben werden, sequentiell zu messen; und
ein Eingabecharakteristik-Sendemittel (21), um Eingabecharakteristika, die sequentiell durch das Eingabecharakteristik-Messmittel (25) gemessen wurden, sequentiell an den Drahtlos-Lautsprecher (1) zu senden.

8. Drahtlos-Audiosystem, umfassend:
einen Drahtlos-Lautsprecher (1a), der ausgelegt ist, um ein Audiosignal nachzubilden und auszugeben; und
die Steuervorrichtung (2a) nach einem der Ansprüche 4 bis 6, die ausgelegt ist, um den Drahtlos-Lautsprecher aus der Ferne zu bedienen,
wobei der Drahtlos-Lautsprecher Folgendes umfasst:
ein Ausgabecharakteristik-Messmittel (16), um Ausgabecharakteristika von Audiosignalen, die innerhalb der vorgegebenen Zeitspanne von dem Drahtlos-Lautsprecher ausgegeben werden, sequentiell zu messen; und
ein Ausgabecharakteristik-Sendemittel (11), um die Ausgabecharakteristika, die durch das Ausgabecharakteristik-Messmittel (16) gemessen wurden, sequentiell an die Steuervorrichtung (2a) zu senden.

9. Computerlesbares Programm, um einen Computer dazu zu bringen, als Drahtlos-Lautsprecher (1) nach einem der Ansprüche 1 bis 3 zu dienen.

10. Computerlesbares Programm, um einen Computer dazu zu bringen, als Steuervorrichtung (2a) nach einem der Ansprüche 4 bis 6 zu dienen.

## Revendications

1. Haut-parleur sans fil (1), qui est configuré de manière à communiquer avec un dispositif de commande (2) et à reproduire et fournir en sortie un signal audio conformément à une opération distante mise en œuvre sur le dispositif de commande (2), le haut-parleur sans fil comprenant :
un moyen de mesure de caractéristiques de sortie (16) pour mesurer séquentiellement des caractéristiques de sortie de signaux audio qui sont fournis en sortie au cours d'une période prédéterminée ;
dans lequel le moyen de mesure de caractéristiques de sortie (16) est configuré de manière à mesurer séquentiellement, en tant que la caractéristique de sortie, des niveaux de volume de sortie de signaux audio qui sont fournis en sortie au cours de la période prédéterminée à partir du haut-parleur sans fil (1) ;
un moyen de réception de caractéristiques d'entrée (17) pour recevoir séquentiellement, en provenance du dispositif de commande, des caractéristiques d'entrée de signaux audio qui sont appliqués en entrée, au cours de la période prédéterminée, à un microphone (20), lequel est inclus dans le dispositif de commande ;
dans lequel le moyen de réception de caractéristiques d'entrée (17) est configuré de manière à recevoir séquentiellement, en tant que la caractéristique d'entrée, des niveaux de volume d'entrée de signaux audio qui sont appliqués en entrée, au cours de la période prédéterminée, au microphone (20) inclus dans le dispositif de commande (2) ;
un moyen de détermination (18) pour comparer la caractéristique de sortie la plus récente mesurée par le moyen de mesure de caractéristiques de sortie (16) et la caractéristique d'entrée la plus récente reçue par le moyen de réception de caractéristiques d'entrée (17) ;
dans lequel le moyen de détermination (18) est configuré de manière à déterminer que l'auditeur est éloigné du voisinage du haut-parleur sans fil (1) lorsqu'un rapport entre le niveau de volume d'entrée le plus récent reçu par le moyen de réception de caractéristiques d'entrée (17) et le niveau de volume de sortie le plus récent mesuré par le moyen de mesure de caractéristiques de sortie (16) chute d'une valeur prédéterminée ou plus; et
un moyen de commande (19) pour interrompre la sortie d'un signal audio lorsque le moyen de détermination (18) détermine que l'auditeur est éloigné du voisinage du haut-parleur sans fil (1).

2. Haut-parleur sans fil (1), lequel est configuré de manière à communiquer avec un dispositif de commande (2) et à reproduire et fournir en sortie un signal audio conformément à une opération distante mise en œuvre sur le dispositif de commande (2), le haut-parleur sans fil comprenant :
un moyen de mesure de caractéristiques de sortie (16) pour mesurer séquentiellement des caractéristiques de sortie de signaux audio qui sont fournis en sortie au cours d'une période prédéterminée ;
dans lequel le moyen de mesure de caractéristiques de sortie (16) est configuré de manière à mesurer séquentiellement, en tant que la caractéristique de sortie, des formes d'onde de sortie de signaux audio qui sont fournis en sortie au cours de la période prédéterminée à partir du haut-parleur sans fil (1) ;
un moyen de réception de caractéristiques d'entrée (17) pour recevoir séquentiellement, en provenance du dispositif de commande, des caractéristiques d'entrée de signaux audio qui sont appliqués en entrée, au cours de la période prédéterminée, à un microphone (20), lequel est inclus dans le dispositif de commande ;
dans lequel le moyen de réception de caractéristiques d'entrée (17) est configuré de manière à recevoir séquentiellement, en tant que la caractéristique d'entrée, des formes d'onde d'entrée de signaux audio qui sont appliqués en entrée, au cours de la période prédéterminée, au microphone (20) inclus dans le dispositif de commande (2) ;
un moyen de détermination (18) pour comparer la caractéristique de sortie la plus récente mesurée par le moyen de mesure de caractéristiques de sortie (16) et la caractéristique d'entrée la plus récente reçue par le moyen de réception de caractéristiques d'entrée (17),
dans lequel le moyen de détermination (18) est configuré de manière à déterminer que l'auditeur est éloigné du voisinage du haut-parleur sans fil (1) lorsqu'un temps de retard de la forme d'onde d'entrée la plus récente reçue par le moyen de réception de caractéristiques d'entrée (17) par rapport à la forme d'onde de sortie la plus récente mesurée par le moyen de mesure de caractéristiques de sortie (16) est égal ou supérieur à une durée prédéterminée ; et
un moyen de commande (19) pour interrompre la sortie d'un signal audio lorsque le moyen de détermination (18) détermine que l'auditeur est éloigné du voisinage du haut-parleur sans fil (1).

3. Haut-parleur sans fil selon la revendication 1 ou 2, comprenant en outre un moyen de réception d'instruction de reprise pour recevoir (12) une instruction de reprise en provenance du dispositif de commande (2),
dans lequel le moyen de commande (19) est configuré de manière à :
stocker une valeur de consigne d'un volume sonore, en tant qu'un niveau de reprise, lorsque le moyen de détermination (18) détermine que l'auditeur est éloigné du voisinage du haut-parleur sans fil (1), et interrompre la sortie d'un signal audio en modifiant la valeur de consigne du volume sonore pour la ramener à un niveau nul; et
modifier la valeur de consigne du volume sonore, du niveau nul au niveau de reprise, lorsque le moyen de réception d'instruction de reprise (12) reçoit l'instruction de reprise dans un délai d'attente prédéterminé depuis l'interruption de la sortie d'un signal audio, et interrompre la reproduction de signaux audio lorsque l'instruction de reprise n'est pas reçue.

4. Dispositif de commande (2a), lequel est configuré de manière à communiquer avec un haut-parleur sans fil (1a) et à faire fonctionner à distance le haut-parleur sans fil configuré de manière à reproduire et fournir en sortie un signal audio, le dispositif de commande comprenant :
un microphone (20) ;
un moyen de mesure de caractéristiques d'entrée (25) pour mesurer séquentiellement des caractéristiques d'entrée de signaux audio qui sont appliqués en entrée au microphone (20) au cours d'une période prédéterminée ;
dans lequel le moyen de mesure de caractéristiques d'entrée (25) est configuré de manière à mesurer séquentiellement, en tant que les caractéristiques d'entrée, des niveaux de volume d'entrée de signaux audio qui sont appliqués en entrée à l'unité de microphone (20) au cours de la période prédéterminée ;
un moyen de réception de caractéristiques de sortie (42) pour recevoir séquentiellement, en provenance du haut-parleur sans fil (1a), des caractéristiques de sortie de signaux audio qui sont fournis en sortie à partir du haut-parleur sans fil (1a) au cours de la période prédéterminée ;
dans lequel le moyen de réception de caractéristiques de sortie (42) est configuré de manière à recevoir séquentiellement, en tant que les caractéristiques de sortie, des niveaux de volume de sortie de signaux audio qui sont fournis en sortie à partir du haut-parleur sans fil (1a) au cours de la période prédéterminée ;
un moyen de détermination (43) pour comparer la caractéristique de sortie la plus récente reçue par le moyen de réception de caractéristiques de sortie (42) et la caractéristique d'entrée la plus récente mesurée par le moyen de mesure de caractéristiques d'entrée (25) ;
dans lequel le moyen de détermination (43) est configuré de manière à déterminer que l'auditeur est éloigné du voisinage du haut-parleur sans fil lorsqu'un rapport entre le niveau de volume d'entrée le plus récent mesuré par le moyen de mesure de caractéristiques d'entrée (25) et le niveau de volume de sortie le plus récent reçu par le moyen de réception de caractéristiques de sortie (42) chute d'une valeur prédéterminée ou plus; et
un moyen de transmission d'instruction d'interruption de sortie (40) pour transmettre, au haut-parleur sans fil (1a), une instruction d'interruption de sortie pour interrompre la sortie d'un signal audio lorsque le moyen de détermination (43) détermine que l'auditeur est éloigné du voisinage du haut-parleur sans fil (1a).

5. Dispositif de commande (2a), lequel est configuré de manière à communiquer avec un haut-parleur sans fil (1a) et à faire fonctionner à distance le haut-parleur sans fil configuré de manière à reproduire et fournir en sortie un signal audio, le dispositif de commande comprenant :
un microphone (20) ;
un moyen de mesure de caractéristiques d'entrée (25) pour mesurer séquentiellement des caractéristiques d'entrée de signaux audio qui sont appliqués en entrée au microphone (20) au cours d'une période prédéterminée ;
dans lequel le moyen de mesure de caractéristiques d'entrée (25) est configuré de manière à mesurer séquentiellement, en tant que les caractéristiques d'entrée, des formes d'onde d'entrée de signaux audio qui sont appliqués en entrée à l'unité de microphone (20) au cours de la période prédéterminée ;
un moyen de réception de caractéristiques de sortie (42) pour recevoir séquentiellement, en provenance du haut-parleur sans fil (1a), des caractéristiques de sortie de signaux audio qui sont fournis en sortie à partir du haut-parleur sans fil (1a) au cours de la période prédéterminée ;
dans lequel le moyen de réception de caractéristiques de sortie (42) est configuré de manière à recevoir séquentiellement, en tant que les caractéristiques de sortie, des formes d'onde de sortie de signaux audio qui sont fournis en sortie à partir du haut-parleur sans fil au cours de la période prédéterminée ;
un moyen de détermination (43) pour comparer la caractéristique de sortie la plus récente reçue par le moyen de réception de caractéristiques de sortie (42) et la caractéristique d'entrée la plus récente mesurée par le moyen de mesure de caractéristiques d'entrée (25) ;
dans lequel le moyen de détermination (43) est configuré de manière à déterminer que l'auditeur est éloigné du voisinage du haut-parleur sans fil lorsqu'un temps de retard, de la forme d'onde d'entrée la plus récente mesurée par le moyen de mesure de caractéristiques d'entrée (25), par rapport à la forme d'onde de sortie la plus récente reçue par le moyen de réception de caractéristiques de sortie (42), est égal ou supérieur à une durée prédéterminée ; et
un moyen de transmission d'instruction d'interruption de sortie (40) pour transmettre, au haut-parleur sans fil (1a), une instruction d'interruption de sortie pour interrompre la sortie d'un signal audio lorsque le moyen de détermination (43) détermine que l'auditeur est éloigné du voisinage du haut-parleur sans fil (1a).

6. Dispositif de commande selon la revendication 4 ou 5, comprenant en outre :
un moyen de transmission d'instruction de reprise (24) pour transmettre, au haut-parleur sans fil (1a), conformément à une instruction émise par l'auditeur, une instruction de reprise pour reprendre la sortie d'un signal audio qui a été interrompue par l'instruction d'interruption de sortie transmise à partir du moyen de transmission d'instruction d'interruption de sortie (40) ; et
un moyen de transmission d'instruction de mise hors tension (41) pour transmettre, au haut-parleur sans fil, une instruction de mise hors tension pour mettre hors tension le haut-parleur sans fil une fois le temps écoulé, à l'expiration d'un délai d'attente prédéterminé dans une période qui suit la transmission de l'instruction d'interruption de sortie en provenance du moyen de transmission d'instruction d'interruption de sortie (40), sans transmission de l'instruction de reprise à partir du moyen de transmission d'instruction de reprise (24).

7. Système audio sans fil, comprenant :
le haut-parleur sans fil (1) selon l'une quelconque des revendications 1 à 3 ; et
un dispositif de commande (2) configuré de manière à faire fonctionner à distance le haut-parleur sans fil ;
dans lequel le dispositif de commande inclut :
un microphone (20) ;
un moyen de mesure de caractéristiques d'entrée (25) pour mesurer séquentiellement des caractéristiques d'entrée de signaux audio qui sont appliqués en entrée au microphone au cours de la période prédéterminée ; et
un moyen de transmission de caractéristiques d'entrée (21) pour transmettre séquentiellement, au haut-parleur sans fil (1), les caractéristiques d'entrée mesurées séquentiellement par le moyen de mesure de caractéristiques d'entrée (25).

8. Système audio sans fil, comprenant :
un haut-parleur sans fil (1a) configuré de manière à reproduire et fournir en sortie un signal audio ; et
le dispositif de commande (2a) selon l'une quelconque des revendications 4 à 6, lequel est configuré de manière à faire fonctionner à distance le haut-parleur sans fil ;
dans lequel le haut-parleur sans fil inclut :
un moyen de mesure de caractéristiques de sortie (16) pour mesurer séquentiellement des caractéristiques de sortie de signaux audio qui sont fournis en sortie à partir du haut-parleur sans fil au cours de la période prédéterminée ; et
un moyen de transmission de caractéristiques de sortie (11) pour transmettre séquentiellement, au dispositif de commande (2a), les caractéristiques de sortie mesurées séquentiellement par le moyen de mesure de caractéristiques de sortie (16).

9. Programme lisible par ordinateur, pour amener l'ordinateur à fonctionner en tant qu'un haut-parleur sans fil (1) selon l'une quelconque des revendications 1 à 3.

10. Programme lisible par ordinateur, pour amener l'ordinateur à fonctionner en tant qu'un dispositif de commande (2a) selon l'une quelconque des revendications 4 à 6.
